# EUROPEAN PATENT SPECIFICATION

(11) **EP 3 714 007 B1**
(45) Date of publication and mention of the grant of the patent: **21.08.2024**
(21) Application number: 18808323.2
(22) Date of filing: 23.11.2018
(51) Int. Cl.: C09D 5/16, C08F 220/00, C08F 230/08, C09D 133/06

(54) **ANTIFOULING COMPOSITION**
ANTIFOULING-ZUSAMMENSETZUNG
COMPOSITION ANTISALISSURES

(30) Priority: 24.11.2017 EP 17203620
(43) Date of publication of application: 30.09.2020
(73) Proprietor: Jotun A/S, 3202 Sandefjord (NO)
(72) Inventor: READ, Marianne Rosenberg, 3209 Sandefjord (NO); DAHLING, Marit, 3209 Sandefjord (NO); SEIM, Marit, 3209 Sandefjord (NO); HED, Kim Oeberg, 3942 Porsgrunn (NO)
(74) Representative: Marks & Clerk LLP
(86) International application number: PCT/EP2018/082364
(87) International publication number: WO 2019/101920

(56) References cited:
- EP-A1- 2 142 607
- WO-A1-2016/004961
- JP-A- H05 230 161

## Description

### INTRODUCTION

The present invention relates to a marine antifouling coating composition comprising polysiloxane-based binder and/or a siloxane copolymer, a copolymer formed from specific (meth)acrylate monomers and optionally a marine antifouling agent, as well as to a method of preparing the composition. The copolymer itself also forms a part of the invention. The invention also relates to paint comprising the composition, to a paint container containing the composition and to a kit for preparing the composition. Additionally the invention relates to an article (e.g. a ship hull) comprising a coating on at least a part of a surface thereof and to a method of coating an article to prevent marine fouling thereon comprising coating at least a part of a surface of the article with the composition.

### BACKGROUND

Surfaces that are submerged in seawater are subjected to fouling by marine organisms such as green and brown algae, slime, barnacles, mussels and tube worms. On marine constructions such as vessels (e.g. ships, tankers), oil platforms and buoys such fouling is undesired and has economic consequences. The fouling may lead to biological degradation of the surface, increased load and accelerated corrosion. On vessels the fouling increases the frictional resistance which will cause reduced speed and/or increased fuel consumption. It can also result in reduced maneuverability.

To prevent settlement and growth of marine organisms antifouling paints are used. Conventionally two types of antifouling paint are employed, self-polishing antifouling paint and fouling release antifouling paint.

Self-polishing antifouling paint comprises an antifouling agent and a binder that gradually dissolves and/or hydrolyses in sea water which enables sea water to erode the coating surface, thereby exposing a new surface. The most successful self-polishing antifouling paints are based on hydrolysable binders such as (meth)acrylate binders with hydrolysable silyl esters. The gradual hydrolysis in seawater provides a controlled release of the antifouling agent from the coating.

Fouling release antifouling paints provide coatings that have low surface tension and low modulus of elasticity and work by providing a fouling release surface to which sea organisms do not stick or if they do stick are washed off by the friction of the water against the surface. Such coatings are often based on polysiloxane-based binders. The fouling release surface created by the polysiloxane-based binder is efficient in prohibiting macro fouling from permanently sticking to the surface. However, the polysiloxane-based surface has not shown good resistance towards soft fouling such as slime and algae over time.

It is well known that hydrophilic surfaces can resist protein absorption. Polymers such as poly(vinylpyrrolidone) and polyacrylamide are known to prevent protein absorption by creating a surface hydration layer of tightly bound water molecules. However such highly hydrophilic polymers have poor compatibility with a polysiloxane-based binder matrix. Grafting of poly(vinylpyrrolidone) and polyacrylamide to poly(dimethyl siloxane) has been reported as a way of introducing such hydrophilic polymers to fouling release coatings.

### SUMMARY OF INVENTION

Viewed from a first aspect the present invention provides an antifouling coating composition comprising:
(i) polysiloxane-based binder and/or a siloxane copolymer;
(ii) a copolymer comprising repeat units of formulae (A) and (B1) and/or (B2) as herein defined; and
(iii) optionally an antifouling agent.

Viewed from a further aspect the present invention provides a method for preparing a composition as hereinbefore defined, comprising mixing:
(i) polysiloxane-based binder and/or a siloxane copolymer;
(ii) a copolymer comprising repeat units of formulae (A) and (B1) and/or (B2) as herein defined; and
(iii) optionally an antifouling agent.

Viewed from a further aspect the present invention provides a copolymer comprising repeat units of formulae (A), (B1) and/or (B2) and optionally (C): 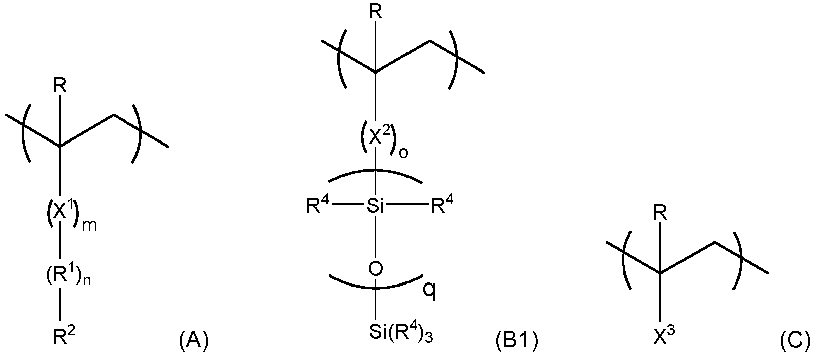 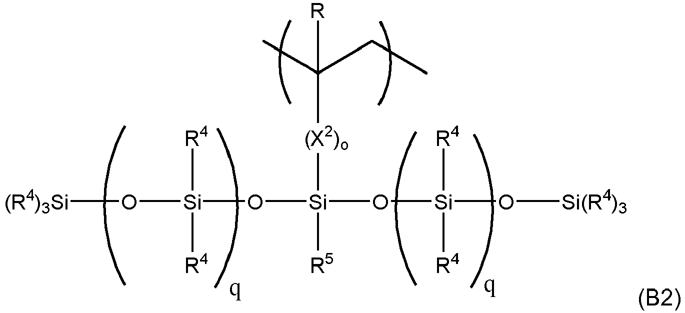 wherein
in formula (A)
   R is selected from H and C₁₋₆ alkyl;
   X¹ is selected from COO, CONH and OCO;
   m is 0 or 1;
   R¹ is selected from substituted or unsubstituted, linear or branched, C₁₋₈ alkylene;
   n is 0 or 1; and
   R² is a substituted or unsubstituted heterocyclyl, NR^{x}R^{y}, NHCOR^{x} or CONR^{x}R^{y}, wherein R^{x} and R^{y} are independently selected from substituted or unsubstituted, linear or branched, C₁₋₈ alkyl,
in formulae (B1) and (B2)
   R is selected from H and C₁₋₆ alkyl;
   X² is selected from COOR³ and OCOR³;
   o is 0 or 1;
   R³ is selected from substituted or unsubstituted, linear or branched, C₁₋₈ alkylene;
   each R⁴ is independently selected from C₁₋₁₀ alkyl and C₅₋₁₀ aryl;
in formula (B1)
   q is an integer from 1 to 160,
in formula (B2)
   q is 0 or an integer from 1 to 80;
   R⁵ is selected from C₁₋₁₀ alkyl, C₅₋₁₀ aryl or O-Si(R⁶)₃, wherein R⁶ is independently selected from C₁₋₁₀ alkyl and C₅₋₁₀ aryl; and
in formula (C):
   R is selected from H and C₁₋₆ alkyl; and
   X³ is selected from COOH, COOR⁷, OCOR⁷,OH or OR⁷ wherein R⁷ is selected from substituted or unsubstituted, linear or branched, C₁₋₈ alkyl;
wherein said copolymer comprises 1-40 wt% of repeat unit (A), a total of 10-90 wt% of repeat units (B1) and/or (B2) and 0 to 70 wt% of repeat unit (C).
   Viewed from a further aspect the present invention provides a method of preparing a copolymer as hereinbefore described, comprising:
polymerising monomers of each of formula (a) and (b1) and/or (b2), and optionally formula (c): 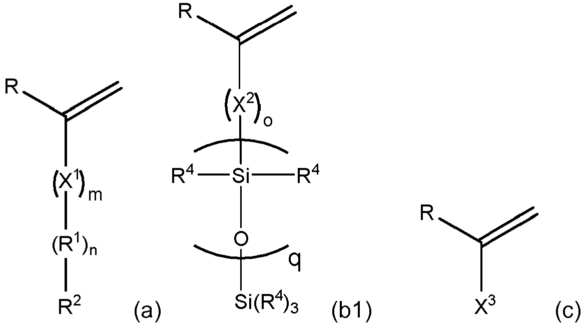 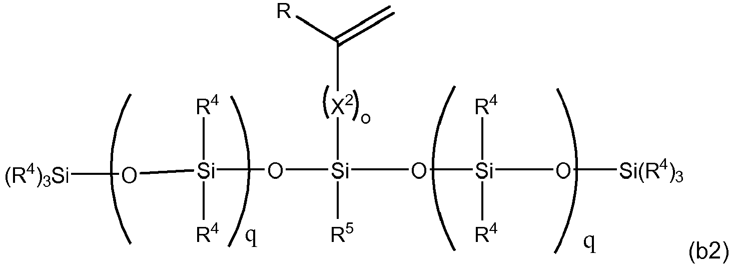
wherein
R, X¹, X², X³, R¹, R², R³, R⁴, m, n, o and q are as hereinbefore defined.
   Viewed from a further aspect the present invention provides a paint comprising a composition as hereinbefore defined.
   Viewed from a further aspect the present invention provides a paint container containing a composition as hereinbefore defined.
   Viewed from a further aspect the present invention provides a kit for preparing a composition as hereinbefore defined, comprising:
      (i) a first container containing copolymer comprising repeat units of formulae (A) and (B1) and/or (B2) as herein defined, polysiloxane-based binder and/or a siloxane copolymer and optionally antifouling agent;
      (ii) a second container containing a crosslinking agent and/or a curing agent and optionally a catalyst;
      (iii) optionally a third container containing a catalyst; and
      (iv) optionally instructions for combining the contents of said containers.
   Viewed from a further aspect the present invention provides an article comprising (e.g. covered with or coated with) a coating on at least a part of a surface thereof, wherein said coating comprises the composition as hereinbefore defined.
   Viewed from a further aspect the present invention provides a method of coating an article to prevent fouling thereon, wherein said method comprises:
coating at least a part of a surface of said article with a composition as hereinbefore defined; and
drying and/or curing said coating.
   Viewed from a further aspect the present invention provides the use of a composition as hereinbefore defined for coating at least a part of a surface of an article to prevent fouling thereon.

### DEFINITIONS

As used herein the term "antifouling coating composition" refers to a composition that, when applied to a surface, prevents or minimises growth of marine organisms on a surface. This term encompasses both fouling release compositions and self-polishing fouling release compositions.

As used herein the term "fouling release composition" refers to a composition which, when applied to a surface, provides a "non-stick" surface to which it is difficult for sea organisms to permanently stick.

As used herein the term "self-polishing fouling release composition" refers to a composition which, when applied to a surface, provides a "non-stick" surface to which it is difficult for sea organisms to permanently stick and which gradually hydrolyses and/or erodes. The hydrolysis and/or erosion effectively renews the surface (referred to as self-polishing), providing a fresh non-stick surface.

As used herein the term "binder" refers to the film forming components of the composition. The polysiloxane-based binder and/or a siloxane copolymer of the composition is the main binder in the composition, i.e. it forms at least 50 wt% of the binder present. As used herein, the term "binder" does not encompass additive oils. Additive oils are not considered herein to be film-forming components.

As used herein the term "paint" refers to a composition comprising the antifouling coating composition as herein described and optionally solvent which is ready for use, e.g. for spraying. Thus the antifouling coating composition may itself be a paint or the antifouling coating composition may be a concentrate to which solvent is added to produce a paint.

As used herein the term "polysiloxane" refers to a polymer comprising siloxane, i.e. -Si-O- repeat units.

As used herein the term "polysiloxane-based binder" refers to a binder that comprises at least 50 wt%, preferably at least 60 wt% and more preferably at least 70 wt% repeat units comprising the motif -Si-O-, based on the total weight of the polymer. Polysiloxane-based binders may comprise up to 99.99 wt% repeat units comprising the motif -Si-O-, based on the total weight of the polymer. The repeat units, -Si-O- may be connected in a single sequence or alternatively may be interrupted by non-siloxane parts, e.g. organic-based parts.

As used herein the term "non-degradable polysiloxane-based binder" refers to a polysiloxane-based binder which does not undergo hydrolytic degradation or erosion in sea water.

As used herein the term "siloxane copolymer" refers to a polymer comprising siloxane, i.e. -Si-O- repeat units and at least one other repeat unit. Siloxane copolymers comprise 10-99 wt% repeat units comprising the motif -Si-O- and 1-90 wt% of at least one other repeat unit, based on the total weight of the polymer.

As used herein the term "degradable siloxane copolymer" refers to a siloxane copolymer which undergoes hydrolytic degradation or erosion in sea water. Preferably the degradable siloxane copolymer is a hydrolytically degradable siloxane copolymer. The hydrolysis reaction occurs in the polymer backbone for the siloxane copolymer to be considered hydrolytically degradable. It will be understood that the rate of the hydrolysis reaction is highly dependent on both the chemical structure/composition of the hydrolytically degradable siloxane copolymer as well as the surrounding environmental conditions (salinity, pH, temperature, etc.). The hydrolytically degradable group should be one which hydrolyses at rate sufficient so as to cause a coating surface polishing effect when said surface is moving through sea water, i.e. undergo hydrolysis in sea water at a temperature, pH and salinity reflective of natural sea water. The term hydrolytically degradable siloxane copolymer is different to hydrolysable polysiloxane binder. The former comprise hydrolytically degradable groups in the copolymer backbone causing degradation of the binder upon hydrolysis in seawater. Hydrolysable polysiloxane binders, on the other hand, solely comprise hydrolysable groups in side groups or chains attached to the polymer backbone. Such hydrolysable groups are commonly alkoxy-silane groups attached to the polymer backbone which, upon hydrolysis, undergo subsequent crosslinking and/or curing reactions.

As used herein the term "alkyl" refers to saturated, straight chained, branched or cyclic groups. Alkyl groups may be substituted or unsubstituted.

As used herein the term "cycloalkyl" refers to a cyclic alkyl group.

As used herein the term "alkylene" refers to a bivalent alkyl group.

As used herein the term "alkenyl" refers to unsaturated, straight chained, branched or cyclic groups. Alkenyl groups may be substituted or unsubstituted.

As used herein the term "aryl" refers to a group comprising at least one aromatic ring. The term aryl encompasses heteroaryl as well as fused ring systems wherein one or more aromatic ring is fused to a cycloalkyl ring. Aryl groups may be substituted or unsubstituted. An example of an aryl group is phenyl, i.e. C₆H₅. Phenyl groups may be substituted or unsubstituted.

As used herein the term "substituted" refers to a group wherein one or more, for example up to 6, more especially 1, 2, 3, 4, 5 or 6, of the hydrogen atoms in the group are replaced independently of each other by the corresponding number of the described substituents. The term "optionally substituted" as used herein means substituted or unsubstituted.

As used herein the term "arylalkyl" group refers to groups wherein the bond to the Si is via the alkyl portion.

As used herein the term "polyether" refers to an organic compound comprising two or more -O- linkages.

As used herein the terms "poly(alkylene oxide)", "poly(oxyalkylene) and "poly(alkylene glycol)" refer to a compound comprising -alkylene-O- repeat units. Typically the alkylene is ethylene or propylene.

As used herein the term "(meth) acrylate" encompasses both methacrylate and acrylate.

As used herein the term wt% is based on the dry weight of the coating composition, unless otherwise specified

As used herein the term "molecular weight" refers to weight average molecular weight (Mw), unless otherwise specified.

As used herein the term "PDI" or polydispersity index refers to the ratio Mw/Mn, wherein Mn refers to number average molecular weight.

As used herein the term "volatile organic compound (VOC)" refers to a compound having a boiling point of 250 °C or less.

As used herein "antifouling agent" refers to a biologically active compound or mixture of biologically active compounds that prevents the settlement of marine organisms on a surface, and/or prevents the growth of marine organisms on a surface and/or encourages the dislodgement of marine organisms from a surface.

### DETAILED DESCRIPTION OF THE INVENTION

The present invention relates to a copolymer and to marine antifouling coating compositions comprising the copolymer. The copolymer comprises repeat units of formulae (A), (B1) and/or (B2) and optionally (C): 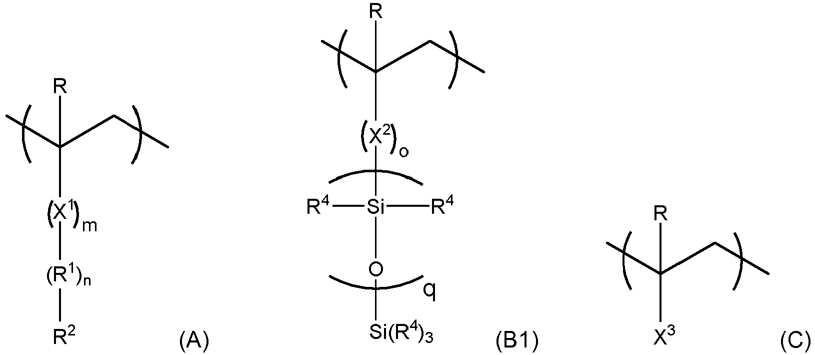 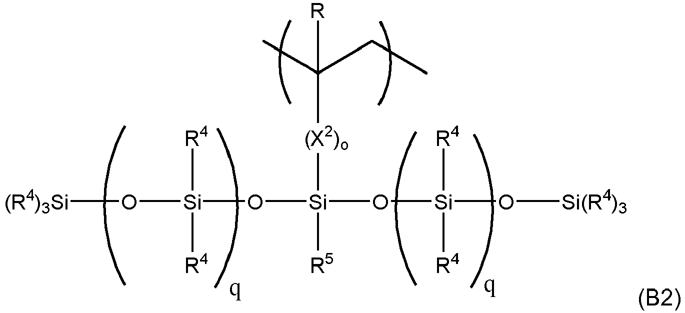 wherein
in formula (A)
   R is selected from H and C₁₋₆ alkyl;
   X¹ is selected from COO, CONH and OCO;
   m is 0 or 1;
   R¹ is selected from substituted or unsubstituted, linear or branched, C₁₋₈ alkylene;
   n is 0 or 1; and
   R² is a substituted or unsubstituted heterocyclyl, NR^{x}R^{y}, NHCOR^{x} or CONR^{x}R^{y}, wherein R^{x} and R^{y} are independently selected from substituted or unsubstituted, linear or branched, C₁₋₈ alkyl,
in formulae (B1) and (B2)
   R is selected from H and C₁₋₆ alkyl;
   X² is selected from COOR³ and OCOR³;
   o is 0 or 1;
   R³ is selected from substituted or unsubstituted, linear or branched, C₁₋₈ alkylene;
   each R⁴ is independently selected from C₁₋₁₀ alkyl and C₅₋₁₀ aryl; and
in formula (B1)
   q is an integer from 1 to 160;
and in formula (B2)
   q is 0 or an integer from 1 to 80,
   R⁵ is selected from C₁₋₁₀ alkyl, C₅₋₁₀ aryl or O-Si(R⁶)₃, wherein R⁶ is independently selected from C₁₋₁₀ alkyl and C₅₋₁₀ aryl; and
in formula (C):
   R is selected from H and C₁₋₆ alkyl; and
   X³ is selected from COOH, COOR⁷, OCOR⁷,OH or OR⁷ wherein R⁷ is selected from substituted or unsubstituted, linear or branched, C₁₋₈ alkyl;
wherein said copolymer comprises 1-40 wt% of repeat unit (A), a total of 10-90 wt% of repeat units (B1) and/or (B2) and 0 to 70 wt% of repeat unit (C).

As well as the copolymer the marine antifouling coating compositions comprise a polysiloxane-based binder and/or siloxane copolymer and optionally an antifouling agent. The marine antifouling coating compositions of the present invention advantageously possess improved efficiency against marine fouling, specifically soft fouling, e.g. algae and slime. The compositions of the present invention provide fouling release coatings and self-polishing fouling release compositions.

The use of the co-polymers of the present invention in antifouling coating compositions represents a new way of introducing heteroatom containing polar groups to the surface of a coating comprising polysiloxane-based binder and/or a siloxane copolymer. The co-polymers of the present invention are made from readily available ethylenically unsaturated monomers containing polysiloxane and heteroatom containing polar groups.

Coatings prepared using the compositions of the invention are believed to provide improved antifouling performance in a number of ways. The presence of the polysiloxane-based groups pendant from the copolymer backbone is believed to facilitate mixing of the copolymer with the polysiloxane-based binder and/or siloxane copolymer to form a homogeneous mixture and homogeneous antifouling coating. It is believed that the copolymer will migrate to the surface of the coating and that the flexible carbon backbone in the co-polymer will give the heteroatom-containing groups pendant from the copolymer backbone the opportunity to arrange in the most favourable manner and "face outwards" from the coating to the aqueous environment. The heteroatom containing polar groups will form a hydrogel or hydrogel-type structure from the interaction with water molecules that prevents marine fouling such as the deposition of slime and algae onto the coated surface.

An advantage of the co-polymers of the present invention is that by carefully choosing the type of monomers, chain length and type of heteroatom containing polar monomer the properties of the co-polymers such as polarity, surface tension, glass transition temperature (Tg) and compatibility with the polysiloxane-based binder and/or siloxane copolymer matrix can be easily adjusted. This makes the use of the co-polymers of the present invention in polysiloxane-based binder and/or siloxane copolymer-based antifouling coatings a very versatile strategy for introducing heteroatom containing polar groups onto the surface of coatings comprising polysiloxane-based binder and/or polysiloxane copolymer and thereby improving the efficiency of the coatings against marine fouling specifically algae and slime.

### Copolymer

In preferred copolymers and compositions of the invention, the copolymer comprises a repeat unit derived from of at least one monomer of each of formula (a) and (b1) and/or (b2), and optionally formula (c): 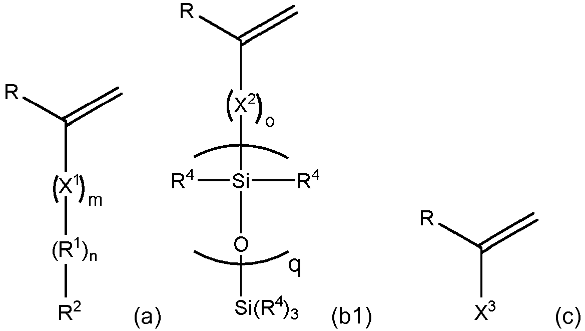 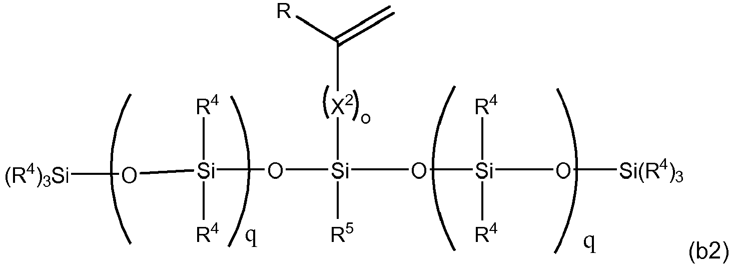 wherein
R, X¹, X², X³, R¹, R², R³, R⁴, m, n, o and q are as hereinbefore defined. Preferred values for q in (b1) are as for (B1). Preferred values for q in (b2) are as for (B2).

When monomers (a), (b1), (b2) and (c) are polymerised they produce repeat units (A), (B1), (B2) and (C) respectively.

Further preferred copolymers and compositions of the invention comprise a copolymer of formula (Xb1) or (Xb2): 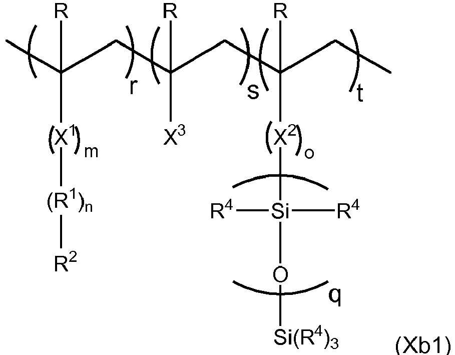 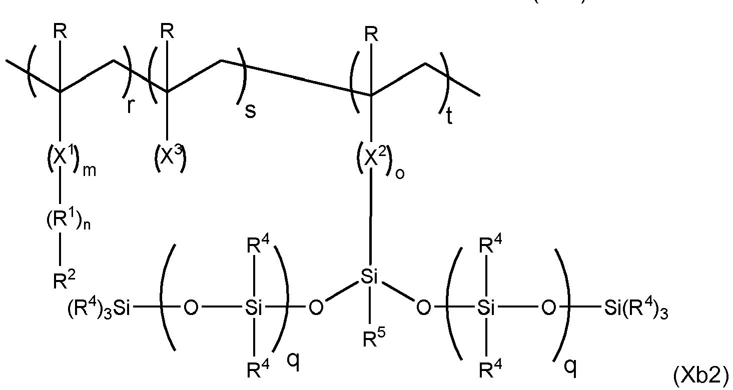 wherein
R, X¹, X², X³, R¹, R², R³, R⁴, m, n, o and q are as herein defined; and
said copolymer comprises 1-40 wt%, preferably 5-35 wt% and more preferably 5-30 wt% of repeat unit r, 0-70 wt%, preferably 0.5-50 wt% and more preferably 1-30 wt% of repeat unit s and 10-90 wt%, preferably 30-90 wt% and more preferably 40-90 wt% of repeat unit t. Preferred values for q in (b1) are as for (B1). Preferred values for q in (b2) are as for (B2).

In formulae (Xb1) and (Xb2), the subscripts r, s and t are intended to represent the proportion of the different repeat units present in the copolymer and do not necessarily represent the connectivity of the units. The copolymer present in the compositions of the invention may be block copolymers or random copolymers. Preferably the copolymer is a random copolymer.

In preferred repeat units of formula (A), (B1), (B2) and (C), preferred monomers of formula (a), (b1), (b2) and (c) and preferred copolymers of formula (Xb1) and (Xb2), R is H or CH₃.

In some preferred repeat units of formula (A), preferred monomers of formula (a), and preferred copolymers, e.g. of formula (Xb1) and (Xb2), m is 0. When m is 0, preferably n is also 0.

In further preferred repeat units of formula (A), preferred monomers of formula (a), and preferred copolymers, e.g. of formula (Xb1) and (Xb2), m is 1 and X¹ is COO or CONH. More preferably m is 1 and X¹ is COO. In further preferred repeat units of formula (B1) or (B2), preferred monomers of formula (b1) and (b2), and preferred copolymers, e.g. of formula (Xb1) and (Xb2), o is 1 and X² is COOR³.

Thus preferably the backbone of the copolymer is a (meth)acrylate and/or (meth)acrylamide and more preferably a (meth)acrylate. The copolymer of the present invention preferably comprises at least 60 wt%, more preferably at least 75 wt% and still more preferably at least 90 wt% (meth)acrylate monomers, based on the dry weight of the polymer. Preferred copolymers present in the composition of the present invention comprise 60-100 wt%, more preferably 75-100 wt% and still more preferably 90-100 wt% (meth)acrylate monomers, based on the dry weight of the polymer. Particularly preferred copolymers comprise 100 wt% (meth)acrylate monomers, i.e. they do not comprise any monomers of another type, based on the dry weight of the polymer.

The copolymer of the present invention preferably comprises at least two (e.g. 2, 3 or 4) different (meth)acrylate and/or (meth)acrylamide monomers and more preferably at least three (e.g. 3) different (meth)acrylate and/or (meth)acrylamide monomers.

In preferred repeat units of formula (A), preferred monomers of formula (a), and preferred copolymers, e.g. of formula (Xb1) and (Xb2), n may be 0 or 1. In some cases preferably n is 1. When n is 1, R¹ is preferably substituted or unsubstituted, linear or branched C₁₋₆ alkylene and still more preferably substituted or unsubstituted, linear or branched C₁₋₄ alkylene. Preferably R¹ is unsubstituted. Preferably R¹ is linear. Still more preferably R¹ is unsubstituted, linear C₁₋₄ alkylene and yet more preferably R¹ is unsubstituted, linear C₁₋₃ alkylene, e.g. -CH₂-, -CH₂CH₂- or -CH₂CH₂CH₂-. In other cases, preferably n is 0 and still more preferably n is 0 and m is 0.

In preferred repeat units of formula (A), preferred monomers of formula (a) and preferred copolymers, e.g. of formula (Xb1) and (Xb2), R² is heterocyclyl or NR^{x}R^{y}, wherein R^{x} and R^{y} are independently selected from substituted or unsubstituted, linear or branched, C₁₋₈ alkyl. Preferably R² is heterocyclyl.

When R² is heterocyclyl, the heterocyclyl preferably comprises 5-10 ring atoms, more preferably 5-8 ring atoms and still more preferably 5 or 6 ring atoms. Preferably the heterocyclyl comprises 4-9 carbon ring atoms, more preferably 4 to 6 carbon ring atoms and still more preferably 4 or 5 carbon ring atoms. Preferably the heterocyclyl is saturated.

In further preferred heterocyclyls, the heteroatom is selected from N, O and S or a combination thereof, more preferably N and O and a combination thereof and still more preferably N. Preferred heterocyclyl rings comprise 1-3 heteroatoms, more preferably 1 or 2 heteroatoms and still more preferably 1 heteroatom.

In preferred heterocyclyls comprising a nitrogen atom, the lone pair of electrons present on the nitrogen is delocalised and therefore non-nucleophillic. Thus in preferred heterocyclyls comprising a nitrogen atom, the nitrogen atom is adjacent to one or more carbonyl or thioketone groups and more preferably adjacent to one or more carbonyl groups. The skilled person in the art will therefore realise that in preferred heterocyclyls comprising nitrogen atoms, the nitrogen atom may be present in the form of an amide, a thioamide, a carbamate or a carbamide.

Representative examples of heterocyclyls that may be present include: pyrrolidone, pyrrolidine, pyrazolidine, imidazolidine, 1,3-dioxolane, tetrahydrothiophene, 1,2-oxathiolane, 1,3-oxathiolane, succinimide, 2-oxazolidone, 4-oxazolidone, hydantoin, piperidine, piperazine, 1,4-dioxane, thiane, 1,3-dithiane, 1,4-dithiane, morpholine, and thiomorpholine. Another example is caprolactam. Preferred examples of heterocyclyls that may be present include: pyrrolidone, pyrrolidine, pyrazolidine, imidazolidine, 1,3-dioxolane, tetrahydrothiophene, 1,2-oxathiolane, 1,3-oxathiolane, succinimide, 2-oxazolidone, 4-oxazolidone, hydantoin, piperidine, piperazine, 1,4-dioxane, thiane, 1,3-dithiane, 1,4-dithiane, morpholine, thiomorpholine and caprolactam. Particularly preferred heterocyclyls are selected from pyrrolidone, 2-oxazolidone, 4-oxazolidone, succinimide, hydantoin and caprolactam, e.g. pyrrolidone, 2-oxazolidone, 4-oxazolidone, succinimide, and hydantoin. Caprolactam is also particularly preferred.

Heterocyclyls present in the monomers and copolymers of the present invention are optionally substituted. Suitable substituents include C₁₋₆ alkyl, OR⁶, OH, COOH, COOR⁶, NH₂, NHR⁶, NR⁶₂, halide and NHCOOR⁶. Preferred substituents are C₁₋₆ alkyl, and more preferably C₁₋₃ alkyl, e.g. methyl. More preferably, however, the heterocyclyl is unsubstituted.

Particularly preferred heterocyclyls are selected from:

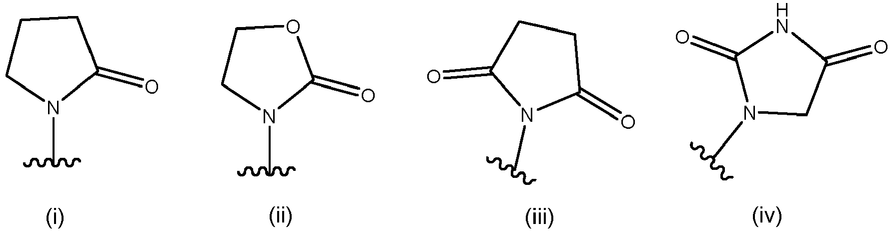

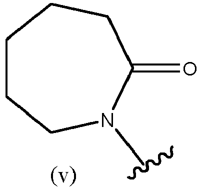

Further preferred heterocyclyls are selected from:

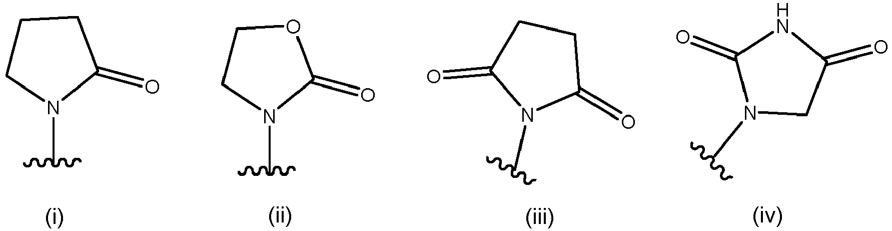

Another preferred heterocyclyl is:

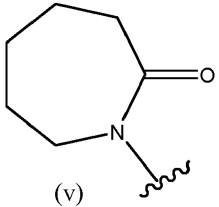

Pyrrolidone, i.e. (i), is a particularly preferred heterocyclyl. Caprolactam, i.e. (v), is another particularly preferred heterocyclyl.

In some preferred repeat units of formula (A), preferred monomers of formula (a) and preferred copolymers, e.g. of formula (Xb1) and (Xb2), R² is non-heterocyclyl.

When R² is NR^{x}R^{y}, R^{x} and R^{y} are preferably selected from C₁₋₃ alkyl and more preferably methyl and ethyl and particularly methyl. When R² is NR^{x}R^{y}, X¹ is preferably selected from -CONH and -COO.

The alkyl group may be substituted or unsubstituted. Suitable substituents include OR⁸, OH, COOH, COOR⁸, NH₂, NHR⁸, NR⁸₂, halide and NHCOOR^{8,} wherein R⁸ is C₁₋₆ alkyl. Preferably, however, the alkyl is unsubstituted.

When R² is NHCOR^{x} or CONR^{x}R^{y}, R^{x} and R^{y} are preferably selected from C₁₋₄ alkyl and more preferably methyl, ethyl, propyl or butyl and particularly butyl. The alkyl group may be substituted or unsubstituted. Suitable substituents include OR⁸, OH, COOH, COOR⁸, NH₂, NHR⁸, NR⁸₂ and halide, wherein R⁸ is C₁₋₆ alkyl. Preferably, however, the alkyl is unsubstituted.

More preferably R² is selected from substituted or unsubstituted heterocyclyl or NR^{x}R^{y}, wherein R^{x} and R^{y} are independently selected from substituted or unsubstituted, linear or branched, C₁₋₈ alkyl. Still more preferably R² is selected from substituted or unsubstituted pyrrolidone, substituted or unsubstituted 2-oxazolidone, substituted or unsubstituted succinimide, substituted or unsubstituted hydantoin or N(CH₃)₂. Another preferred R² group is substituted or unsubstituted caprolactam. Thus preferably R² is selected from substituted or unsubstituted pyrrolidone, substituted or unsubstituted substituted or unsubstituted 2-oxazolidone, substituted or unsubstituted succinimide, substituted or unsubstituted hydantoin or N(CH₃)₂.

Preferred monomers of formula (a) present in the copolymer include those shown below: 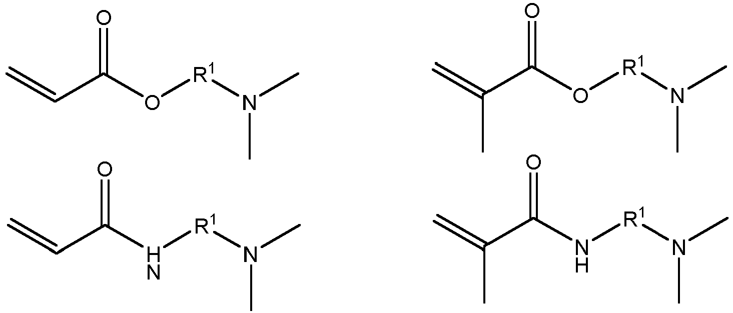 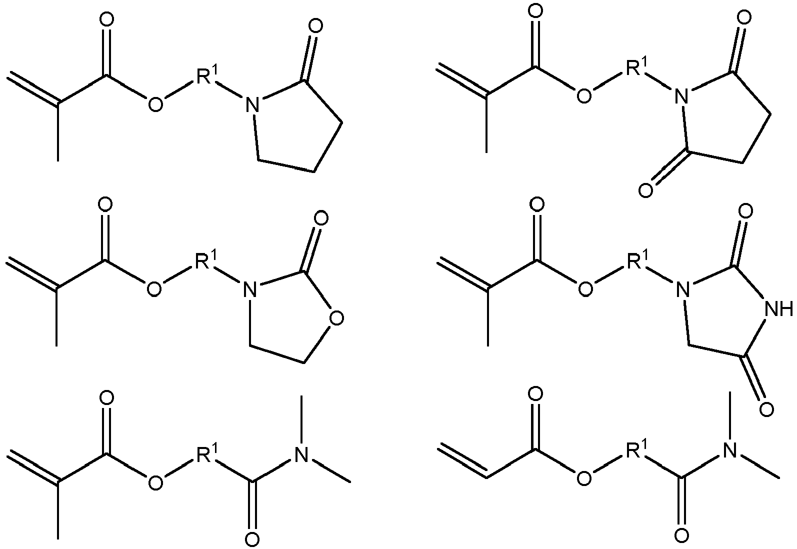 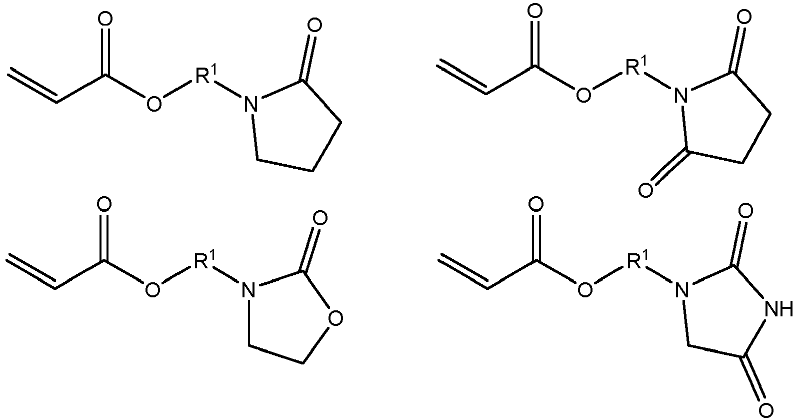 wherein R¹ is preferably substituted or unsubstituted, linear or branched C₁₋₆ alkylene and still more preferably substituted or unsubstituted, linear or branched C₁₋₄ alkylene. Preferably R¹ is unsubstituted. Preferably R¹ is linear. Still more preferably R¹ is unsubstituted, linear C₁₋₄ alkylene and yet more preferably R¹ is unsubstituted, linear C₁₋₃ alkylene, e.g. -CH₂-, -CH₂CH₂- or -CH₂CH₂CH₂-.

Other preferred monomers of formula (a) present in the copolymer are: 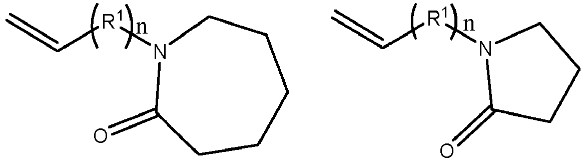 wherein n is 0 or 1 and R¹ is preferably substituted or unsubstituted, linear or branched C₁₋₆ alkylene and still more preferably substituted or unsubstituted, linear or branched C₁₋₄ alkylene. Still more preferably n is 0.

Examples of monomers of formula (a) present in the copolymer include 1-methacryloyl-2-pyrrolidone, 2-(1-pyrrolidonyl)ethyl methacrylate, 2-(1-pyrrolidonyl)methyl methacrylate, 2-(1-pyrrolidonyl)propyl methacrylate, 2-(2-oxo-3-oxazolidinyl)ethyl methacrylate, 2-(2-oxo-1-imidazolidinyl)ethyl methacrylate 2-N-morpholinoethyl methacrylate, 2-(dimethylamino)ethyl methacrylate, 3-(dimethylamino)propyl methacrylate, 2-(diethylamino)ethyl methacrylate, 2-(diisopropylamino)ethyl methacrylate, 2-(tert-butylamino)ethyl methacrylate, 1-acryloyl-2-pyrrolidone, 2-(1-pyrrolidonyl)ethyl acrylate, 2-(1-pyrrolidonyl)methyl acrylate, 2-(1-pyrrolidonyl)propyl acrylate, 2-(2-oxo-3-oxazolidinyl)ethyl acrylate, 2-(2-oxo-1-imidazolidinyl)ethyl acrylate 2-N-morpholinoethyl acrylate, 2-dimethylaminoethylmethacrylate, 3-dimethylaminopropylmethacrylate, 4-dimethylaminobutylmethacrylate, 2-dimethylaminoethylmethacrylamide, 3-dimethylaminopropylmethacrylamide, 4-dimethylaminobutylmethacrylamide, 2-dimethylaminoethylacrylate, 3-dimethylaminopropylacrylate, 4-dimethylaminobutylacrylate, 2-dimethylaminoethylacrylamide, 3-dimethylaminopropylacrylamide, 4-dimethylaminobutylacrylamide, 2-(diethylamino)ethylacrylate, 2-(diisopropylamino)ethyl acrylate, 2-(tert-butylamino)ethyl acrylate, N,N-dimethylacrylmethamide, N,N-diethylacrylmethamide, N,N-diisopropylacrylmethamide, N-isopropylacrylmethamide, N-tert-butylacrylmethamide, N-[3-(dimethylamino)propyl]acrylmethamide, N,N-dimethylacrylamide, N,N-diethylacrylamide, N,N-diisopropylacrylamide, N-isopropylacrylamide, N-tert-butylacrylamide, N-[3-(dimethylamino)propyl]acrylamide, 1-vinyl-2-pyrrolidone, N-vinylcaprolactam and N-methyl-N-vinylacetamide. 2-(1-pyrrolidonyl)ethyl methacrylate, 2-dimethylaminoethylmethacrylate and 3-dimethylaminopropylmethacrylamide are preferred monomers. N-vinylcaprolactam and N-vinylpyrrolidone are other preferred monomers. Particularly preferred monomers are therefore selected from 2-(1-pyrrolidonyl)ethyl methacrylate, 2-dimethylaminoethylmethacrylate, 3-dimethylaminopropylmethacrylamide, N-vinylcaprolactam and N-vinylpyrrolidone.

In preferred repeat units of formula (B1) and (B2), preferred monomers of formula (b1) and (b2), and preferred copolymers, e.g. of formula (Xb1) and (Xb2), R³ is preferably substituted or unsubstituted, linear or branched C₁₋₆ alkylene and still more preferably substituted or unsubstituted, linear or branched C₁₋₄ alkylene. Preferably R³ is unsubstituted. Preferably R³ is linear. Still more preferably R³ is unsubstituted, linear C₁₋₆ alkylene and yet more preferably R³ is unsubstituted, linear C₁₋₄ alkylene, e.g. -CH₂CH₂- or -CH₂CH₂CH₂-.

In preferred repeat units of formula (B1) and (B2), preferred monomers of formula (b1) and (b2), and preferred copolymers, e.g. of formula (Xb1) and (Xb2), R⁴ is preferably C₁₋₈ alkyl or C₅₋₁₀ aryl. Preferred alkyl groups are C₁₋₄ alkyl, e.g. methyl, ethyl, n-propyl, i-propyl, n-butyl, i-butyl and t-butyl. A preferred aryl group is phenyl. Still more preferably R⁴ is methyl or butyl.

In preferred repeat units of formula (B1) and preferred monomers of formula (b1), q is 1-160, preferably 1-65, more preferably 1-30 and more preferably 1-20. In preferred repeat units of formula (B2) and preferred monomers of formula (b2), q is 0-80, preferably 0-33, more preferably 0-15, more preferably 0-10

In preferred repeat units of formula (B2), preferred monomers of formula (b2) and preferred copolymers of formula (Xb2), R⁵ is preferably C₁₋₈ alkyl or O-Si(R⁶)₃. Preferred alkyl groups include methyl, ethyl, n-propyl and i-propyl. Still more preferably R⁵ is methyl. If R⁵ is aryl, it is preferably phenyl.

In further preferred repeat units of formula (B2), preferred monomers of formula (b2) and preferred copolymers of formula (Xb2), each R⁶ is preferably C₁₋₈ alkyl or C₅₋₁₀ aryl. Preferred alkyl groups include methyl, ethyl, n-propyl and i-propyl. A preferred aryl group is phenyl. Still more preferably R⁶ is methyl.

Preferred monomers of formula (b1) present in the copolymer present in the antifouling coating composition of the present invention include monomethacryloxypropyl terminated polydimethylsiloxane, such as α-methacryloyloxypropyl-ω-butyl polydimethylsiloxane, α-methacryloyloxypropyl-ω-trimethylsilyl polydimethylsiloxane, α-methacryloyloxyethyl-ω-trimethylsilyl polydimethylsiloxane, α-acryloyloxypropyl-ω-butyl polydimethylsiloxane, α-acryloyloxypropyl-ω-trimethylsilyl polydimethylsiloxane, α-acryloyloxyethyl-ω-trimethylsilyl polydimethylsiloxane; monovinyl terminated polydimethylsiloxane, such as α-vinyl-ω-butyl polydimethylsiloxane, α-vinyl-ω-trimethylsilyl polydimethylsiloxane.

Preferred monomers of formula (b1) have a number average molecular weight of 200 to 12000, more preferably a number average molecular weight of 400 to 5000, more preferably 400 to 2500 and most preferably 400 to 1500.

Representative examples of commercially available monomers of formula (b1) include X-22-174ASX, X22-174BX, KF-2012, X-22-2426 and X-22-2404 from Shin-Etsu, Silaplane FM-0711, Silaplane FM-0721, Silaplane FM-0725 from JNC Corporation, PS560 from United Chemical Technologies and MCR-M07, MCR-M11, MCR-M17, MCR-M22 and MCR-V41 from Gelest.

Preferred monomers of formula (b2) present in the copolymer present in the antifouling coating composition of the present invention include symmetric monomethacryloxypropyl functional polydimethylsiloxane-, such as α,α'-(methyl methacryloyloxypropyl)-bis(ω-butyl) polydimethylsiloxanes, 3-tris(trimethylsiloxy)silylpropyl methacrylate; symmetric monovinyl functional polydimethylsiloxane, such as α,α'-(methyl vinyl)-bis(ω-butyl) polydimethylsiloxanes. Representative examples of commercially available monomers include MCS-M11, MCS-MX11 and MCS-V212 from Gelest.

Preferred monomers of formula (b2) have a number average molecular weight of 200 to 12000, more preferably a number average molecular weight of 400 to 5000, more preferably 400 to 2500 and most preferably 400 to 1500.

Preferred copolymers comprise a repeat unit of formula (C). These repeat units derive from monomers of formula (c). The presence of such repeat units is preferred to fine tune the properties of the co-polymers such as flexibility, hardness, hydrophilicity, hydrophobicity, compatibility etc.

In preferred repeat units of formula (C), preferred monomers of formula (c), and preferred copolymers, e.g. of formula (Xb1) and (Xb2), X³ is COOH or COOR⁷, and preferably COOR⁷, wherein R⁷ is selected from substituted or unsubstituted, linear or branched, C₁₋₈ alkyl. Preferably R⁷ is substituted or unsubstituted, linear or branched C₁₋₄ alkyl and still more preferably substituted or unsubstituted, linear or branched C₁₋₂ alkyl. Preferably R⁷ is unsubstituted. Preferably R⁷ is linear. Still more preferably R⁷ is unsubstituted, linear C₁₋₄ alkyl and yet more preferably R⁷ is unsubstituted, linear C₁₋₂ alkyl, e.g.-CH₃ or -CH₂CH₃.

Preferred monomers of formula (c) present in the copolymer include methyl acrylate, ethyl acrylate, tert-butyl acrylate, n-butyl acrylate, isobutyl acrylate, hexyl acrylate, 2-ethylhexyl acrylate, octyl acrylate, isooctyl acrylate, acrylic acid, 2-hydroxyethyl acrylate, 4-hydroxylbutyl acrylate, 2-methoxyethyl acrylate, methyl methacrylate, ethyl methacrylate, tert-butyl methacrylate, n-butyl methacrylate, isobutyl methacrylate, hexyl methacrylate, 2-ethylhexyl methacrylate, octyl methacrylate, isooctyl methacrylate, methacrylic acid, 2-hydroxyethyl methacrylate, 4-hydroxylbutyl methacrylate and 2-methoxyethyl methacrylate. Particularly preferably the monomers present in the copolymer of the invention are selected from methyl acrylate, ethyl acrylate, n-butyl acrylate, 2-ethylhexyl acrylate, methyl methacrylate and n-butyl methacrylate. Methyl methacrylate is a particularly preferred monomer.

Optionally the copolymer of the present invention further comprises a repeat unit of formula (D): 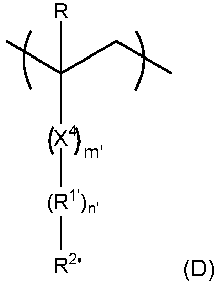 wherein in formula (D)
R is selected from H and C₁₋₆ alkyl;
X⁴ is selected from COO and OCO;
m' is 0 or 1;
R^{1'} is selected from substituted or unsubstituted, linear or branched, C₁₋₈ alkylene; n' is 0 or 1; and
R^{2'} is poly(alkylene oxide).

Optionally the copolymer of the present invention further comprises a repeat unit derived from at least one monomer of formula (d): 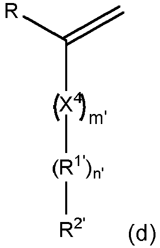 wherein
R, R^{1'}, R^{2'}, X⁴, m' and n' are as defined above.

When monomer (d) is polymerised it produces a repeat unit (D).

In preferred repeat units of formula (D), preferred monomers of formula (d), and preferred copolymers of the invention, R is H or CH₃.

In further preferred repeat units of formula (D), preferred monomers of formula (d), and preferred copolymers of the invention, m' is 1 and X⁴ is COO. Thus preferably monomer (d) is a (meth)acrylate monomer.

In preferred repeat units of formula (D), preferred monomers of formula (d), and preferred copolymers of the invention, n' may be 0 or 1. When n' is 1, R^{1'} is preferably substituted or unsubstituted, linear or branched C₁₋₄ alkylene and still more preferably substituted or unsubstituted, linear or branched C₁₋₂ alkylene. Preferably R^{1'} is unsubstituted. Preferably R^{1'} is linear. Still more preferably R^{1'} is unsubstituted, linear C₁₋₄ alkylene and yet more preferably R^{1'} is unsubstituted, linear C₁₋₂ alkylene, e.g. - CH₂CH₂-. In preferred repeat units of formula (D), preferred monomers of formula (d), and preferred copolymers of the invention, however, n' is 0.

In preferred repeat units of formula (D), preferred monomers of formula (d), and preferred copolymers of the invention, R² is polyethylene oxide, polypropylene oxide or a mixture thereof. Preferably R^{2'} is of formula (I):

-[(CH₂CH₂O)ᵤ(CH₂CH(CH₃)O)ᵥ]-R⁶ (I)

wherein
R⁶ is selected from H, CH₃, CH₂CH₃ and COCH₃; and
each u is 0 to 50, each v is 0 to 50 with the proviso that u+v is 2 to 50.

When v is 0, R² is a poly(ethylene oxide). When u is 0, R² is polypropylene oxide). When both u and v are non-zero, R² is a mixture of poly(ethylene oxide) and polypropylene oxide). The different alkylene oxide units may be arranged in blocks or randomly and more preferably randomly. Thus formula (I) does not necessarily represent the connectivity of the alkylene oxide units in R².

As used herein the term polyethylene oxide) covers dimers, trimers and oligomers as well as longer polymers. Thus when v is 0, for example, u is preferably 2 to 50 and preferably 4 to 40. Similarly the term polypropylene oxide) covers dimers, trimers and oligomers as well as longer polymers.

Examples of monomers of formula (d) present in the copolymer include poly(ethylene glycol) methyl ether methacrylate, polypropylene glycol) methyl ether methacrylate, di(ethylene glycol) methyl ether methacrylate, tri(ethylene glycol) methyl ether methacrylate, poly(ethylene glycol) methyl ether acrylate, polypropylene glycol) methyl ether acrylate, di(ethylene glycol) methyl ether acrylate, tri(ethylene glycol) methyl ether acrylate, poly(ethylene glycol) ethyl ether methacrylate, polypropylene glycol) ethyl ether methacrylate, di(ethylene glycol) ethyl ether methacrylate, tri(ethylene glycol) ethyl ether methacrylate, poly(ethylene glycol) ethyl ether acrylate, polypropylene glycol) ethyl ether acrylate, di(ethylene glycol) ethyl ether acrylate, tri(ethylene glycol) ethyl ether acrylate, poly(ethylene glycol) methacrylate, polypropylene glycol) methacrylate, poly(ethylene glycol) acrylate, polypropylene glycol) acrylate and polypropylene glycol) monovinyl ether. Generally monomers referred to as "poly(alkylene glycol)-containing monomers comprise 4-50 alkylene oxide units and monomers referred to as "di(alkylene glycol)" and "tri(alkylene glycol"-containing monomers comprise 2 and 3 alkylene oxide units respectively.

Preferred monomers of formula (d) present in the copolymer include poly(ethylene glycol)methyl ether methacrylate, polypropylene glycol) methyl ether methacrylate, poly(ethylene glycol) methyl ether acrylate, polypropylene glycol) methyl ether acrylate, poly(ethylene glycol) ethyl ether methacrylate, polypropylene glycol) ethyl ether methacrylate, poly(ethylene glycol) ethyl ether acrylate, polypropylene glycol) ethyl ether acrylate, poly(ethylene glycol) methacrylate, polypropylene glycol) methacrylate, poly(ethylene glycol) acrylate and polypropylene glycol) acrylate.

Preferred monomers of formula (d) have a number average molecular weight (Mn) of 100-3500, more preferably 200-2000 and still more preferably 250-1000.

Representative examples of commercially available monomers include Visiomer MPEG 750 MA W, Visiomer MPEG 1005 MA W, Visiomer MPEG 2005 MA W, Visiomer MPEG 5005 MA W from Evonik, Bisomer PPA6, Bisomer PEA6, Bisomer PEM6, Bisomer PPM5, Bisomer PEM63P, Bisomer MPEG350MA, Bisomer MPEG550MA, Bisomer S10W, BisomerS20W from Geo Speciality Chemicals, SR550 MPEG350MA, SR552 MPEG500MA from Sartomer and RPEG 750 from Ineos Oxide.

Preferred copolymers of the present invention comprise 1-40 wt% of repeat unit (A), preferably 5-35 wt% of repeat unit (A) and still more preferably 5 to 30 wt% of repeat unit (A).

Preferred copolymers of the present invention comprise a total of 10-90 wt% of repeat units (B1) and/or (B2), preferably a total of 30-90 wt% of repeat units (B1) and/or (B2) and still more preferably a total of 40 to 90 wt% of repeat units (B1) and/or (B2).

Preferred copolymers of the present invention comprise 0 to 70 wt% of repeat unit (C), preferably 0.5 to 50 wt% of repeat unit (C) and still more preferably 1 to 30 wt% of repeat unit (C).

Preferred copolymers of the present invention comprise 0 to 30 wt% of repeat unit (D), preferably 0.5 to 20 wt% of repeat unit (D) and still more preferably 5 to 10 wt% of repeat unit (D).

Advantageously the distribution of the hetero-containing, siloxane-containing and optionally polyoxyalkylene modified (meth)acrylate monomers present in the copolymer can be adjusted. This provides the ability to fine tune the properties of the copolymer, e.g. flexibility, surface tension and compatibility with the polysiloxane-based binder and/or siloxane copolymer present in the composition.

Preferred copolymers of the present invention have a weight average molecular weight of 10,000 to 50,000, more preferably 15,000 to 40,000 and still more preferably 18,000 to 35,000, preferably measured according to the method described in the examples section.

Preferably the copolymer of the present invention does not contain groups that react with a crosslinker in a curing reaction of the polysiloxane-based binder and/or siloxane copolymer in a coating composition. Depending on the curing reactive groups present in the polysiloxane-based binder and/or siloxane copolymer the monomers (a), (b1), (b2), (c) and (d) forming the copolymer are preferably chosen so that they do not contain groups that can react with the curing reactive groups in the polysiloxane-based binder and/or siloxane copolymer.

Suitable copolymers may be prepared using polymerization reactions known in the art. The (meth)acrylate polymer may, for example, be obtained by polymerizing a monomer mixture in the presence of a polymerization initiator by any of various methods such as solution polymerization, bulk polymerization, emulsion polymerization, and suspension polymerization in a conventional manner. Controlled polymerization techniques may, for example, be employed. When preparing a coating composition using the acrylate polymer as hereinbefore described, the polymer is preferably diluted with an organic solvent to give a polymer solution having an appropriate viscosity. From this standpoint, it is desirable to employ solution polymerization or bulk polymerization to prepare the (meth)acrylate polymer. Examples of suitable polymerization initiators include azo compounds such as dimethyl 2,2'-azobis(2-methylpropionate), 2,2'-azobis(2-methylbutyronitrile), 2,2'-azobis(isobutyronitrile) and 1,1'-azobis(cyanocyclohexane) and peroxides such as tert-butyl peroxypivalate, tert- butyl peroxy-2-ethylhexanoate, tert-butyl peroxydiethylacetate, tert-butyl peroxyisobutyrate, di-tert-butyl peroxide, tert-butyl peroxybenozate, and tert-butyl peroxyisopropylcarbonate, tert-amyl peroxypivalate, tert-amyl peroxy-2- ethylhexanoate, 1,1-di(tert-amyl peroxy)cyclohexane and dibenzoyl peroxide. These compounds may be used alone or as a mixture of two or more thereof.

Examples of suitable organic solvent include aromatic hydrocarbons such as xylene, toluene, mesitylene; ketones such as methyl ethyl ketone, methyl isobutyl ketone, methyl isoamyl ketone, cyclopentanone, cyclohexanone; esters such as butyl acetate, tert-butyl acetate, amyl acetate, ethylene glycol methyl ether acetate; ethers such as ethylene glycol dimethyl ether, di ethylene glycol dimethyl ether, dibutyl ether, dioxane, tetrahydrofuran, alcohols such as n-butanol, isobutanol, benzyl alcohol; ether alcohols such as butoxyethanol, 1-methoxy-2-propanol; aliphatic hydrocarbons such as white spirit; and optionally a mixture of two or more solvents. These compounds are used alone or as a mixture of two or more thereof.

### Composition

The marine antifouling coating composition of the present invention comprises: a copolymer as hereinbefore described, a polysiloxane-based binder and/or siloxane copolymer and optionally an antifouling agent. Optionally the composition further comprises one or more of: (v) cross linking and/or curing agent; (vi) catalyst; (vii) additive oil; (viii) a pigment; (ix) a solvent; (x) filler; and/or (xi) an additive.

The marine antifouling coating compositions of the present invention advantageously possess improved efficiency against marine fouling, especially soft fouling, e.g. algae and slime. The compositions of the present invention provide fouling release coatings and self-polishing fouling release compositions.

The copolymer present in the compositions of the invention is preferably as described above. Preferred copolymers present in the composition are the same as preferred copolymers per se.

The antifouling coating composition may comprise one or more (e.g. 1, 2, 3, 4 or 5) copolymers as hereinbefore described. Preferred antifouling coating compositions of the present invention comprise 1, 2, 3 or 4 copolymers and still more preferably 1, 2 or 3 copolymers.

Preferably the total amount of copolymer present in the compositions of the invention is 0.1-30 wt%, more preferably 2-15 wt% and still more preferably 5-10 wt%, based on the dry weight of the composition.

### Polysiloxane-based binder and/or siloxane copolymer

The coating composition of the present invention comprises a polysiloxane-based binder and/or a siloxane copolymer. Some preferred compositions comprise a polysiloxane-based binder. Other preferred compositions comprise a siloxane copolymer.

Preferred coating compositions of the present invention comprise 30-95 wt% polysiloxane-based binder and/or siloxane copolymer, more preferably 40-90 wt% polysiloxane-based binder and/or siloxane copolymer and still more preferably 50-90 wt% polysiloxane-based binder and/or siloxane copolymer, based on the dry weight of the composition. In preferred compositions of the invention the weight ratio of copolymer to polysiloxane-based binder/siloxane copolymer is 1:90 to 1:2, more preferably 1:35 to 1:6 and still more preferably 1:20 to 1:8.

### Polysiloxane-based binder

The coating composition of the present invention may comprise a polysiloxane-based binder. The polysiloxane-based binder is preferably a non-degradable polysiloxane-based binder. When the polysiloxane is a non-degradable polysiloxane-based binder, the antifouling coating composition of the invention provides a pure fouling release coating.

The polysiloxane-based binder present in the coating compositions of the present invention comprises more than 50 wt% polysiloxane, preferably more than 60 wt% polysiloxane and still more preferably more than 70 wt% polysiloxane. Up to 99.99 wt% polysiloxane may be present. It is to be understood that the polysiloxane-based binder can consist of a single repeating sequence of siloxane units or be interrupted by non-siloxane parts, e.g. organic parts. The organic parts may comprise, for example, alkyl, aryl, poly(alkylene oxide), amide, thioether or combinations thereof.

The non-degradable polysiloxane-based binder present in the antifouling coating compositions of the present invention can in principle be any curable polysiloxane-based binder. The non-degradable polysiloxane-based binder is preferably an organopolysiloxane with terminal and/or pendant curing-reactive functional groups. A minimum of two curing-reactive functional groups per molecule is preferred. Examples of curing-reactive functional groups are silanol, alkoxy, acetoxy, enoxy, ketoxime, alcohol, amine, epoxy and/or isocyanate. In a preferred non-degradable polysiloxane-based binder the curing-reactive functional groups are selected from silanol, alkoxy or acetoxy groups and the curing reaction is a condensation cure reaction. The non-degradable polysiloxane-based binder optionally comprises more than one type of curing-reactive group and may be cured, for example, via both condensation cure and amine/epoxy curing.

The non-degradable polysiloxane-based binder may consist of only one type of non-degradable polysiloxane or be a mixture of different non-degradable polysiloxanes.

A preferred non-degradable polysiloxane-based binder present in the antifouling coating compositions of the present invention is represented by formula (D1) below: 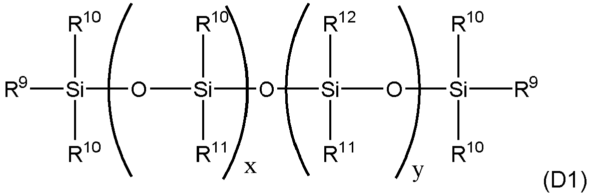 wherein
each R⁹ is independently selected from a hydroxyl group, C₁₋₆-alkoxy group, C₁₋₆-epoxy containing group, C₁₋₆ amine group or O-Si(R¹³)₃-_{z} (R¹⁴)_{z}
each R¹⁰ is independently selected from C₁₋₁₀ alkyl, C₆₋₁₀ aryl, C₇₋₁₀ alkylaryl or C₁₋₆ alkyl substituted by poly(alkylene oxide) and/or a group as described for R⁹;
each R¹¹ and R¹² is independently selected from C₁₋₁₀ alkyl, C₆₋₁₀ aryl, C₇₋₁₀ alkylaryl or C₁₋₆ alkyl substituted by poly(alkylene oxide);
each R¹³ is independently a hydrolysable group such as C₁₋₆ alkoxy group, an acetoxy group, an enoxy group or ketoxy group;
each R¹⁴ is independently selected from an unsubstituted or substituted C₁₋₆ alkyl group;
z is 0 or an integer from 1-2;
x is an integer of at least 2;
y is an integer of at least 2;

Preferably R⁹ is selected from a hydroxyl group and O-Si(R¹³)₃-_{z}(R¹⁴)_{z}, wherein R¹³ is a C₁-C₆ alkoxy group, R¹⁴ is C₁₋₆ alkyl and z is 0 or an integer from 1-2. More preferably R⁹ is selected from a hydroxyl group and O-Si(R¹³)_{3-z}(R¹⁴)_{z}, wherein R¹³ is a C₁-C₃ alkoxy group, R¹⁴ is C₁₋₃ alkyl and z is 0 or an integer from 1-2. Still more preferably R⁹ is a hydroxyl group.

Preferably R¹⁰ is a C₁₋₁₀ alkyl group. More preferably R¹⁰ is a C₁₋₄ alkyl group, still more preferably a C₁₋₂ alkyl group, and yet more preferably a methyl group. Preferably each R¹⁰ is the same.

Preferably R¹¹ is a C₁₋₁₀ alkyl group. More preferably R¹¹ is a C₁₋₄ alkyl group, still more preferably a C₁₋₂ alkyl group, and yet more preferably a methyl group. Preferably each R¹¹ is the same.

Preferably R¹² is a C₁₋₁₀ alkyl group. More preferably R¹² is a C₁₋₄ alkyl group, still more preferably a C₁₋₂ alkyl group, and yet more preferably a methyl group. Preferably each R¹² is the same.

Still more preferably R⁹ is a hydroxyl group and R¹⁰, R¹¹ and R¹² are each methyl groups.

Another preferred non-degradable polysiloxane-based binder present in the antifouling coating compositions of the present invention is represented by formula (D2) below: 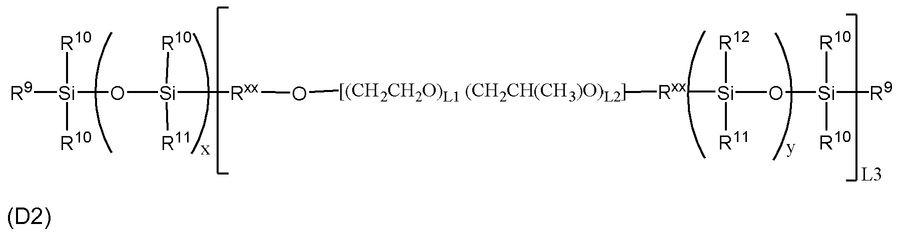 wherein R⁹, R¹⁰, R¹¹, R¹² and x and y are as defined for (D1), R^{xx} is C₂₋₃ alkyl, each L1 is 0 to 50, each L2 is 0 to 50 with the proviso that L1+L2 is 2 to 50, preferably 4 to 40, more preferably 4 - 20, most preferably 4-10 and L3 is 1-200, preferably 2-100, most preferably 5-50.

The weight average molecular weight of the non-degradable polysiloxane-based binder present in the antifouling coating compositions of the present invention is preferably 400-150,000, more preferably 1000-120,000, and still more preferably 5000-110,000.

Preferred coating compositions of the present invention comprise 30-95 wt% non-degradable polysiloxane-based binder, more preferably 40-90 wt% non-degradable polysiloxane-based binder and still more preferably 50-90 wt% non-degradable polysiloxane-based binder, based on the total dry weight of the composition. In preferred compositions of the invention the weight ratio of copolymer to non-degradable polysiloxane-based binder is 1:2 to 1:90, more preferably 1:6 to 1:35 and still more preferably 1:8 to 1:20.

Suitable non-degradable polysiloxane-based binders for use in the coating composition of the present invention are commercially available. Representative commercially available non-degradable polysiloxane based binders include Xiameter^{®} OHX-0135, Xiameter^{®} OHX-4000, Xiameter^{®} OHX-4010, Xiameter^{®} OHX-4040, Xiameter^{®} OHX-4050, Xiameter^{®} OHX-4060 from Dow Corning, PolymerOH 0.08, PolymerOH 0.75, Polymer OH 1, PolymerOH 2, PolymerOH 3.5, Polymer OH 5, Polymer OH20, PolymerOH 80 from Evonik and DMS-S15, DMS-S21, DMS-S27, DMS-S31, DMS-S32, DMS-S33, DMS-S35, DMS-S42, DMS-S51 from Gelest.

### Siloxane copolymer

The coating composition of the present invention may comprise a siloxane copolymer. The siloxane copolymer is preferably degradable, e.g. hydrolytically degradable, siloxane copolymer. When the siloxane copolymer is a degradable, e.g. hydrolytically degradable, siloxane copolymer, the antifouling coating composition of the invention provides a self-polishing or renewable fouling release coating. The use of a self-polishing fouling release surface means that slime and algae, and other soft fouling, can physically be removed with or without the need for antifouling agents. Antifouling agents may optionally be included in either type of coating, e.g. for application to surfaces that are subject to high fouling intensity.

Preferably the hydrolytically degradable siloxane copolymer comprises polysiloxane units E and organic units F forming an EFEF type polysiloxane copolymer. Preferably the repeating units are introduced via polysiloxane monomer e and organic monomer f respectively or via polysiloxane monomers e additionally having organic terminal groups f.

Preferably the hydrolytically degradable siloxane copolymer comprises multiple ester and/or acetal groups in the backbone of the polymer. The ester and/or acetal functional groups are preferably groups that undergo hydrolysis in seawater at a temperature range, pH and salinity reflective of natural sea water.

More preferably the degradable siloxane copolymer comprises a plurality of hydrolytically degradable ester groups in the backbone of the polymer, such as 3 or more. Other hydrolytically degradable groups might also be present. Other groups that might be present include acetal, hemiacetal and ketal. For the avoidance of doubt, ethers, thioethers, amides and amines are not considered sufficiently hydrolytically degradable in this respect. The siloxane group is also not considered sufficiently hydrolytically degradable.

The hydrolytically degradable groups are present in the backbone of the degradable siloxane copolymer, i.e. not in a side chain off the main polymer chain. The hydrolytically degradable groups preferably repeat in the backbone. Whilst there may additionally be hydrolytically degradable groups in side chains of the siloxane copolymer, hydrolytically degradable groups must be present in the backbone of the polymer. In order to be effective the hydrolytically degradable groups should preferably be spread throughout the polymer molecule. The siloxane copolymer is preferably of structure -[EFEF]-, with at least two repeating units of E and at least two repeating units of F. It will be appreciated that there are many repeating units and the formula -[EFEF]-is intended to encompass copolymers with any number of EF repeating units. It should also be understood that a person skilled in the art understands that there are many ways to create a hydrolytically degradable siloxane copolymer. For example copolymer structures such as FFFFEEEEFFFF triblock copolymers and random copolymers (e.g. EFFFEEFEE) are also feasible.

The monomers e and f react together to form polymer repeating units E and F. The backbone of the hydrolytically degradable siloxane copolymer preferably contains the hydrolytically degradable linkage -[Si(R¹⁵)₂-(CH₂)ₐ-O-CO-]- or -[Si(R¹⁵)₂-(CH₂)ₐ-COO]- wherein R¹⁵ and a are as defined below. Other hydrolytically degradable linkages may alternatively or additionally be present such as acetal.

Hydrolytically degradable links or bonds may be formed during an actual polymerisation reaction or they may be present within the backbone of the polymerising units before polymerisation and hence become part of the copolymer backbone during polymerisation. In some preferred siloxane copolymers hydrolytically degradable links or bonds are present within the monomers and introduced into the polymer backbone therefrom. Thus in some preferred hydrolytically degradable siloxane copolymers monomer f contains at least one hydrolytically degradable group within its backbone which will become part of the polymer backbone upon copolymerisation with the polysiloxane monomer e.

Alternatively the introduction of hydrolytically degradable groups relies on the reaction between the monomer e and the second monomer f so as to generate the, e.g. ester, hydrolytically degradable linkage. As is evident to the person skilled in the art such a reaction can be carried out in many ways depending on the end group on the polysiloxane e and the end group on the second monomer f. The chemistry involved in coupling the two reactants to form an ester is therefore broadly defined but chemically quite simple. The skilled person knows many ways of developing, e.g. an ester linkage. It will be appreciated that the polysiloxane monomer e can act as the nucleophile or may act as the electrophile depending on the functional groups present. It may be easier to use the polysiloxane monomer e as a nucleophile but the invention could easily be adapted to place an electrophilic group at the end of the polysiloxane monomer e and allow attack on the polysiloxane monomer e by the second monomer f. The polymerisation is preferably a condensation polymerisation or addition polymerisation but other types of polymerisation familiar to the skilled person can also be used.

Optionally, the second monomer f might contain one or more hydrolytically degradable groups in its backbone that become part of the polymer backbone upon copolymerisation with the polysiloxane monomer. At the same time a hydrolytically degradable link is developed between the monomers e and f on copolymerisation.

Preferred siloxane copolymers of the invention comprise 10-99 wt% repeat units comprising the motif -Si-O-, more preferably 40-98 wt% repeat units comprising the motif -Si-O- and still more preferably 50-97 wt% repeat units comprising the motif - Si-O-. Preferred coating compositions of the invention comprise 30-95 wt% hydrolytically degradable siloxane copolymer, more preferably 40-90 wt% hydrolytically degradable siloxane copolymer and still more preferably 50-90 wt% hydrolytically degradable siloxane copolymer, based on the total dry weight of the composition. In preferred compositions of the invention the weight ratio of copolymer to hydrolytically degradable siloxane copolymer is 1:2 to 1:90, more preferably 1:6 to 1:35 and still more preferably 1:8 to 1:20.

Preferably the hydrolytically degradable siloxane copolymer is one or more of the three classes set out below. Class 1 hydrolytically degradable siloxane copolymers are preferred.

### Class 1: Siloxane copolymer with hydrolytically degradable ester linkages

The hydrolytically degradable siloxane copolymer with ester linkages is preferably the reaction product of at least one polysiloxane of general formula e_{1:} 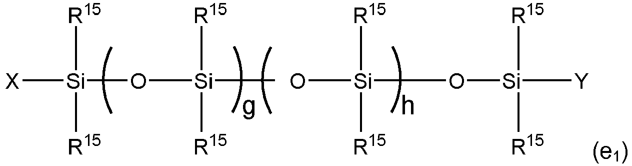 wherein
each R¹⁵ is the same or different and is selected from an unsubstituted or substituted C₁₋₂₀ alkyl, C₂₋₂₀ alkenyl, C₃₋₂₀ cycloalkyl, C₆₋₂₀ aryl, C₇₋₂₀ arylalkyl group, or a C₁₋₆ alkyl substituted by poly(alkylene oxide); preferably each R¹⁵ is independently selected from a C₁₋₂₀ alkyl, more preferably C₁₋₁₀ alkyl and most preferably each R¹⁵ is a methyl group;
X and Y can be the same or different and represent (CR¹⁶₂)_{c}-OH, (CR¹⁶₂)_{c}COOH, (CR¹⁶₂)_{c}COOR¹⁷, or -(CR¹⁶₂)_{c}-(OR¹⁸)ₐ-(OR¹⁸)_{b}-OH; preferably X and Y are (CR¹⁶₂)_{c}-OH or -(CR¹⁶₂)_{c}-(OR¹⁸)ₐ-(OR¹⁸)_{b}-OH
each R¹⁶ is independently selected from C₁₋₆ alkyl or H, more preferably H;
c is 1 to 10, such as 1 to 5, more preferably 2 to 5, yet more preferably 3 to 5;
R¹⁷ is selected from C₁₋₂₀ alkyl, C₂₋₂₀ alkenyl, C₃₋₂₀ cycloalkyl, C₆₋₂₀ aryl, and C₇₋₂₀ arylalkyl group;
each R¹⁸ is independently selected from C₂₋₆ alkylene;
a= 0-50, b= 0-50 and a+b = 1-50; and
g is 1-500, more preferably 10-300, still more preferably 15-100;
h is 1-500, more preferably 10-300, still more preferably 15-100;
or g + h add to 1-500, more preferably 10-300, still more preferably 15-100;
and a second monomer f.

Preferably the second monomer f is:
a siloxane monomer f₁ of the same general formula as described above for e₁ with the proviso that the X and Y groups are chosen so that the monomers e₁ and f₁ can react to form a hydrolytically degradable ester;
a monomer f₃ which is a cyclic anhydride which reacts with the X and Y groups in monomer e₁ to form an ester group; or
a monomer of the general formula f₂ as described below.

   W-Q-Z f₂
wherein
W and Z are each independently selected from R_{c}OOC-, R_{c}OCOO-, R_{c}COOCO-, -COOH, or OH and preferably W and Z are each independently selected from R_{c}OOC- and R_{c}COOCO-;
Q is selected from an aliphatic, cycloalkyl, cycloalkenyl, poly(alkylene oxide), amine ether or aromatic group having up to 20 carbon atoms, or Q is -O- or a covalent bond;and
each Rc is the same or different and is selected from H, C₁₋₂₀ alkyl, C₂₋₂₀ alkenyl, C₆₋₂₀ aryl, C₃₋₂₀-cycloalkyl or C₇₋₂₀ arylalkyl group;
with the proviso that the W and Z groups in monomer f₂ are selected to react with the X and Y groups in monomer e₁ to form an ester group.

In preferred monomers f₁, X and Y are selected from (CR¹⁶)_{c}-OH, (CR¹⁶₂)_{c}COOR¹⁷ wherein R¹⁶, R¹⁷ and c are as defined above in relation to formula e₁.

In preferred monomers f₂, W and Z are R_{c}OOC- wherein R_{c} is C₁₋₆ alkyl and Q is aliphatic.

### Class 2: Siloxane copolymer with hydrolytically degradable ester-linkages containing amine or sulphur

Another method of making siloxane copolymer with hydrolytically degradable ester-linkages is utilizing amine and/or sulphur chemistry. These siloxane copolymers with ester-linkages containing sulphur and/or amine are preferably the reaction product of at least one polysiloxane of general formula e₂: 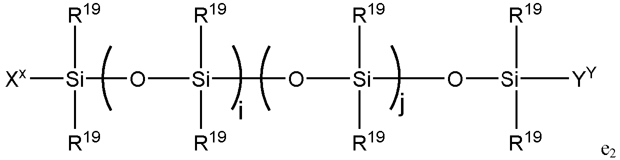 wherein
each R¹⁹ is the same or different and is selected from an unsubstituted or substituted C₁₋₂₀ alkyl, C₂₋₂₀ alkenyl, C₃₋₂₀ cycloalkyl, C₆₋₂₀ aryl, C₇₋₂₀ arylalkyl group, or a C₁₋₆ alkyl substituted by poly(alkylene oxide); preferably each R¹⁹ is independently selected from a C₁₋₂₀ alkyl, more preferably C₁₋₁₀ alkyl and most preferably each R¹⁹ is a methyl group;
X^{X} and Y^{Y} can be the same or different and are selected from -CR²¹=CH₂, - (CR²⁰₂)_{d}-CR²¹=CH₂, -(CR²⁰₂)_{d}-CR²⁰₂-OCO-CR²¹=CH₂, -CR²⁰₂-OCO-CR²¹=CH₂, -(CR²⁰₂)_{d}-SH; -(CR²⁰₂)_{d}-O-(CR²⁰₂)_{d}-SH, -(CR²⁰₂)_{d}-[O-(CR²⁰₂)_{d}]_{dd}-OCO-CR²¹=CH₂, -(CR²⁰₂)_{d}-(OR²² )ₐₐ-(OR²²)_{bb}-OR²³⁻SH, -(CR²⁰₂)_{d}-(OR²²)ₐₐ-(OR²²)_{bb}-OR²³-CR²¹=CH₂, -CR²⁰₂-Ar-CR²⁰₂-SH, -(CR²⁰₂)_{d}-C≡CH, -(CR²⁰₂)_{d}-O-(CR²⁰₂)_{d-}(CHOH)-(CR²⁰₂)_{d}-OCO-CR²¹=CH₂ or - (CR²⁰₂)_{d}-(OR²²)ₐₐ-(OR²²)_{bb}-OR²³C≡CH and preferably X and Y are selected from - CR²¹=CH₂, -(CR²⁰₂)_{d}-CR²⁰₂-OCO-CR²¹=CH₂, -(CR²⁰₂)_{d}-SH and -(CR²⁰₂)_{d}-[O-(CR²⁰₂)_{d}]_{dd}-OCO-CR²¹=CH_{2;}
each R²⁰ is independently selected from C₁₋₆ alkyl or H, preferably H;
d is 1 to 10, such as 1 to 5, preferably 2 to 5, more preferably 3 to 5;
each R²¹ is independently selected from H and Me;
where R²² and R²³ are each independently selected from C₂₋₆ alkylene and aa= 0-50, bb= 0-50 and aa+bb = 1-50;
dd is 1 to 50;
Ar is C₆₋₁₂ aryl; and
i is 1-500, more preferably 10-300, still more preferably 15-100;
j is 1-500, more preferably 10-300, still more preferably 15-100
or i + j add to 1-500, more preferably 10-300, still more preferably 15-100;
and at least one second monomer f₄ of formula

   HS-Q3-SH (f₄)
wherein
Q3 is selected from C₂₋₂₀ alkyl, C₃₋₂₀ cycloalkyl, phenyl, biphenyl, terphenyl, C₇₋₂₀ alkylaryl group, alkyl-polysiloxane-alkyl, C₄₋₂₀ alkylcycloalkyl or polyether;
said C₂₋₂₀ alkyl, C₃₋₂₀ cycloalkyl, C₇₋₂₀ alkylaryl group, or C₄₋₂₀ alkylcycloalkyl optionally comprise one or more, such as 1 to 4, heteroatoms selected from O, N, S or P, preferably O;
with the proviso that the SH groups in monomer f₄ react with the X^{X} and Y^{Y} groups in ester containing monomer e₂ to form a group C-S-CH₂ or S-S group;
or at least one second monomer f₅ of formula (f₅ₐ) or (f_{5b}) 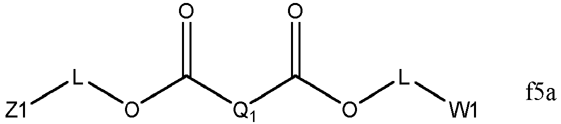 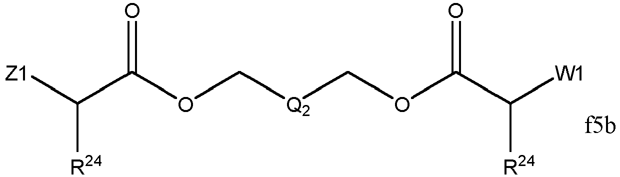 wherein
   Q₁ is selected from a covalent bond, C₁₋₂₀ alkyl, C₃₋₁₀ cycloalkyl, C₃₋₁₀ cycloalkenyl, C₆₋₁₀ aryl, C₇₋₁₂ arylalkyl, a poly(alkylene oxide) chain of formula R²⁵-(OR²⁶)ₐ₁-(OR²6)_{b1}-OR²⁵, -Ph-O-C₁₋₆alkyl-OPh-, heterocycyl or C₄₋₁₀ alkylcycloalkyl; and preferably Q₁ is selected from C₁₋₂₀ alkyl and a poly(alkylene oxide) chain of formula R²⁵-(OR2⁶)ₐ₁-(OR²⁶)_{b1}-OR²⁵,

wherein said C₁₋₂₀ alkyl, C₃₋₁₀ cycloalkyl, or C₃₋₁₀ cycloalkenyl groups optionally comprise one or more, such as 1 to 4, heteroatoms selected from O, N, S or P, preferably O;
   L is C₁₋₂₀ alkylene optionally comprising one or more, such as 1 to 4, heteroatoms selected from O, N, S or P, preferably O or N, or a poly(alkylene oxide) chain of formula:

      -(OR²⁶)ₐ₁-(OR²⁶)_{b1}-OR²⁵-
   where R²⁵ and R²⁶ are each independently C₂₋₆ alkylene and a1= 0-50, b1= 0-50 and a1+b1 = 1-50;

      R²⁴ is H or Me;
   Q₂ is selected from a covalent bond, C₁₋₂₀ alkyl, C₃₋₁₀ cycloalkyl, C₂₋₆ aminoglycol, C₂₋₆ thioglycol, or C₆₋₁₀ aryl;
   wherein said C₁₋₂₀ alkyl, C₃₋₁₀ cycloalkyl, or C₃₋₁₀ cycloalkenyl groups optionally comprise one or more, such as 1 to 4, heteroatoms selected from O, N, S or P, preferably O;
   W1 and Z1 are independently selected from -SH, -(CR²⁷₂)ₖSH, CH₂=CR²⁸-; CH₂=CR²⁸-(CR²⁷₂)ₖ-, -C≡CH, -NHCH₂-CR²⁸=CH₂, NHCH₂-CR²⁸=CH-NHRa, -NHRa or W1 and Z1 are =CH₂ (thus forming a double bond with the C atom to which W1/Z1 is attached) and preferably W1 and Z1 are independently selected from -(CR²⁷₂)ₖSH and CH₂=CR²⁸-(CR²⁷₂)ₖ- or W1 and Z1 are =CH₂;
   Ra is H or C₁₋₆ alkyl, wherein said alkyl group optionally comprises one or more, such as 1 to 4, heteroatoms selected from O, N, S or P, preferably O;
   R²⁷ is independently selected from C₁₋₆ alkyl or H, preferably H;
   R²⁸ independently selected from H and Me
   k is 1 to 10, such as 1 to 5, preferably 2 to 5, more preferably 3 to 5;
with the proviso that the W1 and Z1 groups in monomer f₅ react with the X^{X} and Y^{Y} groups monomer e₂ to form a group C-S-CH₂, an amino group or S-S group;
   or at least one second monomer f₆ of formula:

      HRbN-Q5-NHRb (f₆)
   wherein
   Q₅ is selected from C₂₋₂₀ alkyl, C₂₋₂₀ alkenyl, C₃₋₂₀ cycloalkyl, phenyl, biphenyl, terphenyl, Ph-O-Ph, C₇₋₂₀ alkylaryl group, alkyl-polysiloxane-alkyl, C₄₋₂₀ alkylcycloalkyl, C₃₋₁₀ heterocyclic group or polyether (such as a -(CH₂)₃O-(CH₂CH₂O)ᵣᵣ(CH(CH₃)CH₂O)ₛₛ(CH₂)₃- where rr+ss is 1 to 100) and preferably selected from C₂₋₂₀ alkyl, alkyl-polysiloxane-alkyl and polyether,
   wherein said C₂₋₂₀ alkyl, C₃₋₂₀ cycloalkyl, C₇₋₂₀ alkylaryl group, or C₄₋₂₀ alkylcycloalkyl optionally comprise one or more, such as 1 to 4, heteroatoms selected from O, N, S or P, preferably O;
   Rb is H or C₁₋₆ alkyl;
   with the proviso that the NRbH groups in monomer f₆ react with X^{X} and Y^{Y} groups in ester containing monomer e₂ to form a group C-NRb-CH₂.

Alternatively the siloxane copolymers with ester-linkages containing amine are the reaction product of at least one polysiloxane of general formula e₃: 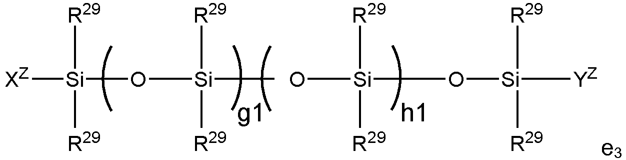 wherein
each R²⁹ is the same or different and selected from an unsubstituted or substituted C₁₋₂₀ alkyl, C₂₋₂₀ alkenyl, C₃₋₂₀ cycloalkyl, C₆₋₂₀ aryl, C₇₋₂₀ arylalkyl group, or a C₁₋₆ alkyl substituted by poly(alkylene oxide), and preferably R²⁹ is unsubstituted or substituted C₁₋₂₀ alkyl, still more preferably unsubstituted C₁₋₂₀ alkyl, and particularly preferably methyl;
X^{Z} and Y^{Z} can be the same or different and are selected from -(CR³⁰₂)ₑₑ-NRdH, -
(CR³⁰₂)ₑₑ-NH-(CR³⁰₂)ₑₑ-NRdH, -(CR³⁰₂)ₑₑ-(O-C₂₋₆ alkyl)ₑₑ-NRdH, -(CR³⁰₂)ₑₑ-O-(CR³⁰₂)ₑₑ - NRdH, or -CR³⁰₂-Ar-CR³⁰₂-NRdH;
each R³⁰ is independently C₁₋₆ alkyl or H, preferably H;
Rd is H or C1-6 alkyl;
ee is 1 to 10, such as 1 to 5, preferably 2 to 5, more preferably 3 to 5; and
g1 is 1-500, more preferably 10-300, still more preferably 15-100;
h1 is 1-500, more preferably 10-300, still more preferably 15-100
or g1 + h1 add to 1-500, more preferably 10-300, still more preferably 15-100; and

at least one second monomer f₇ of formula (f7a) or (f7b) 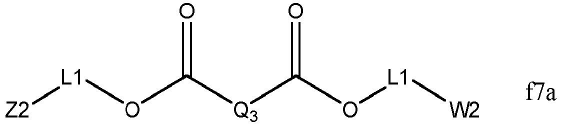 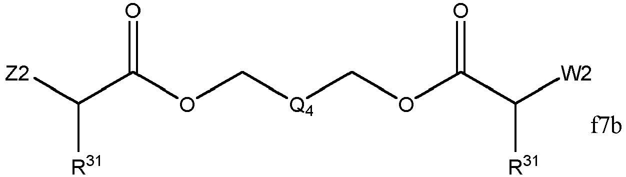 wherein
   Q₃ is selected from a covalent bond, C₁₋₂₀ alkyl, C₃₋₁₀ cycloalkyl, C₃₋₁₀ cycloalkenyl, C₆₋₁₀ aryl, C₇₋₁₂arylalkyl, a poly(alkylene oxide) chain of formula R³²-(OR³³)ₐ₂-(OR³³)_{b2}-OR³², -Ph-O-C₁₋₆alkyl-OPh-, heterocycyl or C₄₋₁₀ alkylcycloalkyl and preferably Q3 is selected from C₁₋₂₀ alkyl;
wherein said C₁₋₂₀ alkyl, C₃₋₁₀ cycloalkyl, or C₃₋₁₀ cycloalkenyl groups optionally comprise one or more, such as 1 to 4, heteroatoms selected from O, N, S or P, preferably O;
   L1 is C₁₋₂₀ alkylene optionally comprising one or more, such as 1 to 4, heteroatoms selected from O, N, S or P, preferably O or N, or a poly(alkylene oxide) chain of formula:

      -(OR³³)ₐ₂-(OR³³)_{b2}-OR³²-
   where R³² and R³³ are each independently C₂₋₆ alkylene and a2= 0-50, b2= 0-50 and a2+b2 = 1-50;
   R³¹ is H or Me;
   Q₄ is selected from a covalent bond, C₁₋₂₀ alkyl, C₃₋₁₀ cycloalkyl, C₂₋₆ aminoglycol, C₂₋₆ thioglycol, or C₆₋₁₀ aryl;
wherein said C₁₋₂₀ alkyl, C₃₋₁₀ cycloalkyl, C₃₋₁₀ cycloalkenyl, optionally comprise one or more, such as 1 to 4, heteroatoms selected from O, N, S or P, preferably O;
   W2 and Z2 are independently selected from CH₂=CR³¹-; CH₂=CR³¹-CH₂-, NHCH₂-CR³¹=CH₂, -C≡CH, or W2 and Z2 are =CH₂ (thus forming a double bond with the C atom to which W2/Z2 is attached) and preferably independently selected from CH₂=CR³¹- and CH₂=CR³¹-CH₂- or W2 and Z2 are =CH₂;
   with the proviso that the W2 and Z2 groups in monomer e₃ react with the amino X^{Z} and Y^{Z} groups in monomer f₇ to form a group C-NRa-CH₂.

### Class 3. Siloxane copolymer with hydrolytically degradable acetal linkage

The hydrolytically degradable siloxane copolymer with acetal linkages is preferably the reaction product of at least one polysiloxane of general formula e₄ 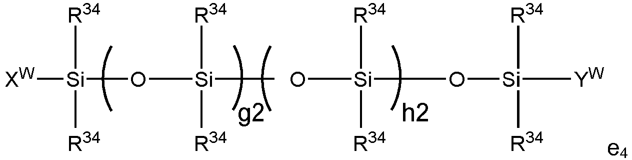 wherein
each R³⁴ is the same or different and selected from an unsubstituted or substituted C₁₋₂₀ alkyl, C₂₋₂₀ alkenyl, C₃₋₂₀ cycloalkyl, C₆₋₂₀ aryl, C₇₋₂₀ arylalkyl group, or a C₁₋₆ alkyl substituted by poly(alkylene oxide), and preferably each R³⁴ is independently selected from unsubstituted or substituted C₁₋₂₀ alkyl, still more preferably unsubstituted C₁₋₂₀ alkyl, and particularly preferably methyl;
X^{W} and Y^{W} can be the same or different and are selected from (CR³⁵₂)_{ef}-OH, (CR³⁵ ₂)_{ef}-OCH=CH₂, -(CR³⁵₂)_{ef}-C=CH₂, -C=CH₂ or -(CR^{33'}₂)_{ef}-(OR^{33'})_{a2'}-(OR^{33'})_{b2'}-OH. Preferably X and Y are (CR³⁵₂)_{ef}-OH, (CR³⁵₂)_{ef}-OCH=CH₂;
each R³⁵ is independently C₁₋₆ alkyl or H, preferably H;
Re is H or C1-6 alkyl;
ef is 1 to 10, such as 1 to 5, preferably 2 to 5, more preferably 3 to 5; and
where R³³ are each independently selected from C₂₋₆ alkylene and a2' = 0-50, b2' = 0-50 and a2'+b2' = 1-50;
g2 is 1-500, more preferably 10-300, still more preferably 15-100;
h2 is 1-500, more preferably 10-300, still more preferably 15-100
or g2 + h2 add to 1-500, more preferably 10-300, still more preferably 15-100;
and at least one second monomer f₈ of the same general formula as described for e₄ with the proviso that the X^{W} and Y^{W} groups monomer of e₃ and the X^{W} and Y^{W} groups of monomer f₈ are chosen so that they react and form a hydrolytically degradable linker like an acetal group;

or a second monomer f₉ of the general formula

   W3-Q5-Z3 f₉

   wherein
   W3 and Z3 are each independently selected from OH, COR³⁶, (CR³⁷₂)_{ff}-OH, - OCH=CH₂, -(CR³⁷₂)_{ff}OCH=CH₂, -C=CH₂ group or -(CR³⁷₂)_{ff}-(OR³⁸)ₐ₃-(OR³⁸)_{b3}-OH and preferably W3 and Z3 are selected from OH, -OCH=CH₂, -(CR³⁷₂)_{ff}OCH=CH₂ and - C=CH₂ group;
   Q5 is an aliphatic, cycloalkyl, cycloalkenyl, poly(alkylene oxide), amine ether or aromatic group having up to 20 carbon atoms,
   R³⁶ is independently selected from C₁₋₆ alkyl or H, more preferably H;
   R³⁷ is independently selected from C₁₋₆ alkyl or H, preferably H;
   R³⁸ are each independently C₂₋₆ alkylene;
   ff is 1 to 10, such as 1 to 5, more preferably 2 to 5, yet more preferably 3 to 5;
   a3= 0-50, b3= 0-50 and a3+b3 = 1-50; or
a monomer f₁₀ of formula

   R³⁹O-CH(R⁴⁰)-O-CH(R⁴⁰)-OR³⁹ f₁₀
where R³⁹ is H or C₁₋₆ alkyl and R⁴⁰ is H, C₁₋₆ alkyl or two R⁴⁰ groups taken together form a ring having 4 to 8 members; or
   a monomer f₁₁ of formula

      W4-Q_{w}-Z4 f₁₁
   wherein
   W4 and Z4 are each independently OH, COH, CO-C₁₋₆ alkyl, -OCH=CH₂, (CH₂)_{gg}OCH=CH₂ or -C=CH₂;
   gg is 1 to 10, such as 1 to 5, preferably 2 to 5, more preferably 3 to 5;
   and Q_{w} is an C₁₋₂₀ alkyl, C₂₋₂₀ alkenyl, C₆₋₂₀ aryl, C₇₋₂₀ arylalkyl interrupted by one or more ester groups- O-CO or CO-O-.
   with the proviso that the W and Z groups in monomers f₉₋₁₁ are selected to react with the X^{w} and Y^{W} groups in monomer e₄ to form a hydrolytically degradable group such as an acetal.

The hydrolytically degradable siloxane copolymers may be prepared according to the methods described in WO2017/009297, WO2017/009301, EP17152301.2.

### Cross linking and/or curing agent

As described above, the polysiloxane-based binder and/or siloxane copolymer of the present invention contains curing-reactive functional groups such as silanol, carbinol, carboxyl, ester, hydride, alkenyl, vinyl ether, allyl ether, alkoxysilane, ketoxime, amine, epoxy, isocyanate and/or alkoxy groups. Preferably the polysiloxane-based binder and/or siloxane copolymer contains at least two curing-reactive functional groups. Optionally the polysiloxane-based binder and/or siloxane copolymer comprises more than one type of curing-reactive functional group. Preferably the polysiloxane-based binder and/or siloxane copolymer comprises a single type of curing-reactive functional group. The appropriate crosslinking and/or curing agents are chosen depending on the curing-reactive functional groups present in the polysiloxane-based binder and/or siloxane copolymer.

In preferred polysiloxane-based binders and/or siloxane copolymers the curing-reactive functional groups are silanol, carbinol, alkoxysilane, isocyanate, amine and/or epoxy. In still further preferred polysiloxane-based binders and/or siloxane copolymers the curing-reactive functional groups are silanol, carbinol and/or alkoxysilane.

If the polysiloxane-based binder and/or siloxane copolymer comprises only two curing-reactive functional groups such as silanol groups, it may be necessary to add a crosslinker to obtain the desired crosslinking density. If the curing-reactive functional groups are silanol, a preferred crosslinking agent is an organosilicon compound represented by the general formula shown below, a partial hydrolysis-condensation product thereof, or a mixture of the two:

R_{d}-Si-K_{4-d}

wherein,
each R is independently selected from an unsubstituted or substituted monovalent hydrocarbon group of 1 to 6 carbon atoms, C₁₋₆ alkyl substituted by poly (alkylene oxide) or a polysiloxane of the structure (O-(CR^{D}₂)_{r'})_{r1'} - (O-(CR^{D}₂)_{s'})_{s1'}-(Si (R^{PP})₂-O)_{t'}-Si(R^{PP})₃ ; wherein r', r1', s' and s1' is an integer from 0-10, each R° is independently selected from H or C₁₋₄ alkyl, each R^{PP} is independently selected from C₁₋₁₀ alkyl, C₆₋₁₀ aryl, C₇₋₁₀ alkylaryl and t' is an integer from 1 to 50;
each K is independently selected from a hydrolysable group such as an alkoxy group; and d is 0, 1 or 2, more preferably 0 or 1.

Preferred crosslinkers of this type include tetraethoxysilane, vinyltris(methylethyloximo)silane, methyltris(methylethyloximo)silane, vinyltrimethoxysilane, methyltrimethoxysilane and vinyltriisopropenoxysilane as well as hydrolysis-condensation products thereof.

If the curing-reactive functional groups are di or tri-alkoxy, a separate crosslinking agent is generally not required.

The crosslinking agent is preferably present in amount of 0-10% of the dry weight of the coating composition. Suitable crosslinking agents are commercially available.

If the curing-reactive functional groups are carbinol, preferred curing agents are monomeric isocyanates, polymeric isocyanates and isocyanate prepolymers. Polyisocyanates are preferred over monomeric isocyanates because of lower toxicity. Polyisocyanates can for example be based on diphenylmethane diisocyanate (MDI), toluene diisocyanate (TDI), hexamethylene diisocyanate (HDI) and isophorone diisocyanate (IPDI) chemistry. These are, for example, supplied under the tradename Desmodur by Covestro and Tolonate by Vencorex. Examples of polyisocyanates are Desmodur N3300, Desmodur 3390 BA/SN, Desmodur N3400, Desmodur N3600 Desmodur N75, Desmodur XP2580, Desmodur Z4470, Desmodur XP2565 and Desmodur VL, supplied by Covestro.

Polyisocyanates can be made with different NCO-functionality. The NCO-functionality is the amount of NCO-groups per polyisocyanate molecule or isocyanate prepolymer molecule. Polyisocyanates curing agents with different NCO-functionality can be used.

The curing agent is preferably present in an amount of 0.8-2.5 equivalents (equiv) NCO groups relative the amount of hydroxyl groups, preferably 0.9-2.0 equiv, more preferably 0.95-1.7 equiv, even more preferably 1-1.5 equiv.

If the curing-reactive functional groups are amine, epoxy or isocyanate, the curing agents are preferably amine, sulfur or epoxy functional.

The curing agents can also be dual curing agents containing, for example, both amine/sulphur/epoxy/isocyanate and an alkoxysilane. Preferred dual curing agents are represented by the general formula below: 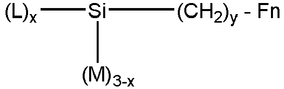 wherein
L is independently selected from an unsubstituted or substituted monovalent hydrocarbon group of 1 to 6 carbon atoms;
each M is independently selected from a hydrolysable group such as an alkoxy group;
x is 0, 1 or 2, preferably 0 or 1;
y an integer from 1 to 6; and
Fn is an amine, epoxy, glycidyl ether, isocyanate or sulphur group.

Preferred examples of such dual curing agents include 3-isocyanatopropyltrimethoxysilane, 3- isocyanatopropyltriethoxysilane, 3-aminopropyltrimethoxysilane, 3-aminopropyltriethoxysilane, (3-glycidoxypropyl)trimethoxysilane, 3-mercaptopropyltrimethoxysilane.

This type of dual-curing agents can be used as a separate curing agent or be used to end-cap the polysiloxane-based binder and/or siloxane copolymer so that the end-groups of the polysiloxane-based binder and/or siloxane copolymer are modified prior to the curing reaction. For example, the mixing of the polysiloxane-based binder and/or siloxane copolymer and the curing agent can be carried out shortly before application of the coating to an article, e.g. an hour or less before coating or the polysiloxane-based binder and/or siloxane copolymer can be supplied in curable form but kept dry in order to prevent premature curing. In some compositions the curing agent/end capping agent is preferably supplied separately to the rest of the coating composition to prevent curing before the coating has been applied to the object. Hence the coating composition of the invention can be supplied as a multipack (preferably three pack) formulation discussed in more detail below.

### Catalyst

In order to assist the curing process, the coating composition of the invention preferably comprises a catalyst. Representative examples of catalysts that can be used include transition metal compounds, metal salts and organometallic complexes of various metals, such as tin, iron, lead, barium, cobalt, zinc, antimony, cadmium, manganese, chromium, nickel, aluminium, gallium, germanium, titanium, boron and zirconium. The salts preferably are salts of long-chain carboxylic acids and/or chelates or organometal salts. Examples of suitable catalysts include for example, dibutyltin dilaurate, dibutyltin dioctoate, dibutyltin diacetate, dibutyl tin 2-ethylhexanoate, dibutyltin di neodecanoate, dibutyltin dimethoxide, dibutyltin dibenzoate, dibutyltin acetoacetonate, dibutyltin acetylacetonate, dibutyltin alkylacetoacetonate, dioctyltin dilaurate, dioctyltin dioctoate, dioctyltin diacetate, dioctyltin 2-ethylhexanoate, dioctyltin dineodecanoate, dioctyltin dimethoxide, dioctyltin dibenzoate, dioctyltin acetoacetonate, dioctyltin acetylacetonate, dioctyltin alkylacetoacetonate, dimethyltin dibutyrate, dimethyltin bisneodecanoate, dimethyltin dineodecanoate, tin naphthenate, tin butyrate, tin oleate, tin caprylate, tin octanoate, tin strearate, tin octoate, iron stearate, iron 2-ethylhexanoate, lead octoate, lead 2-ethyloctoate, cobalt-2-ethylhexanoate, cobalt naphthenate, manganese 2- ethylhexanoate, zinc 2-ethylhexanoate, zinc naphthenate, zinc stearate, metal trifiates, triethyl tin tartrate, stannous octoate, carbomethoxyphenyl tin trisuberate, isobutyl tin triceroate.

Further examples of suitable catalysts include organobismuth compounds, such as bismuth 2-ethylhexanoate, bismuth octanoate and bismuth neodecanoate. Further examples of suitable catalysts include organotitanium, organzirconium and organohafnium compounds and titanates and zirconate esters such as, titanium naphthenate, zirconium naphthenate, tetrabutyl titanate, tetrakis(2- ethylhexyl)titanate, triethanolamine titanate, tetra(isopropenyloxy)-titanate, titanium tetrabutanolate, titanium tetrapropanolate, titanium tetraisopropanolate, tetrabutyl zirconate, tetrakis(2-ethylhexyl) zirconate, triethanolamine zirconate, tetra(isopropenyloxy)-zirconate, zirconium tetrabutanolate, zirconium tetrapropanolate, zirconium tetraisopropanolate and chelated titanates such as diisopropyl bis(acetylacetonyl)titanate, diisopropyl bis(ethylacetoacetonyl)titanate and diisopropoxytitanium bis(ethylacetoacetate).

Preferred catalysts are dibutyltin dilaurate, dibutyltin dioctoate, dibutyl tin diacetate and dioctyltin dilaurate.

Preferably the catalyst is present in the coating composition of the invention in an amount of 0.01 to 5 wt% based on the dry weight of the coating composition, more preferably 0.05 to 4 wt%.

### Antifouling agent

The antifouling coating composition of the present invention optionally comprises an antifouling agent. Some antifouling coating compositions of the present invention comprise an antifouling agent.

The terms antifouling agent, biologically active compounds, antifoulant, biocide, toxicant are used in the industry to describe known compounds that act to prevent marine fouling on a surface. The antifouling agent present in the compositions of the invention is preferably a marine antifouling agent. The antifouling agent may be inorganic, organometallic or organic. Preferably the antifouling agent is an organometallic antifouling agent. Suitable antifouling agents are commercially available.

Examples of inorganic antifouling agents include copper and copper compounds such as copper oxides, e.g. cuprous oxide and cupric oxide; copper alloys, e.g. copper-nickel alloys; copper salts, e.g. copper thiocyanate and copper sulphide.

Examples of organometallic antifouling agents include zinc pyrithione; organocopper compounds such as copper pyrithione, copper acetate, copper naphthenate, oxine copper, copper nonylphenolsulfonate, copper bis(ethylenediamine)bis(dodecylbenzensulfonate) and copper bis(pentachlorophenolate); dithiocarbamate compounds such as zinc bis(dimethyldithiocarbamate) [ziram], zinc ethylenebis(dithiocarbamate) [zineb], manganese ethylenebis(dithiocarbamate) [maneb] and manganese ethylene bis(dithiocarbamate) complexed with zinc salt [mancozeb].

Examples of organic antifouling agents include heterocyclic compounds such as 2-(tert-butylamino)-4-(cyclopropylamino)-6-(methylthio)-1,3,5- triazine [cybutryne], 4,5-dichloro-2-n-octyl-4-isothiazolin-3-one [DCOIT], encapsulated 4,5-dichloro-2-n-octyl-4-isothiazolin-3-one [DCOIT], 1,2-benzisothiazolin-3-one, 2- (thiocyanatomethylthio)-1,3-benzothiazole [benthiazole] and 2,3,5,6-tetrachloro-4- (methylsulphonyl) pyridine; urea derivatives such as 3-(3,4-dichlorophenyl)-1,1- dimethylurea [diuron]; amides and imides of carboxylic acids, sulphonic acids and sulphenic acids such as N-(dichlorofluoromethylthio)phthalimide, N-dichlorofluoromethylthio-N',N'-dimethyl-N-phenylsulfamide [dichlofluanid], N-dichlorofluoromethylthio-N',N'-dimethyl-N-p-tolylsulfamide [tolylfluanid] and N-(2,4,6-trichlorophenyl)maleimide; other organic compounds such as pyridine triphenylborane [TPBP], amine triphenylborane, 3-iodo-2-propynyl N-butylcarbamate [iodocarb], 2,4,5,6-tetrachloroisophthalonitrile, p-((diiodomethyl)sulphonyl) toluene and 4-bromo-2-(4-chlorophenyl)-5 -(trifluoromethyl)-1H-pyrrole-3-carbonitrile [tralopyril].

Other examples of antifouling agents include tetraalkylphosphonium halogenides, guanidine derivatives, imidazole containing compounds such as 4-[1-(2,3-dimethylphenyl)ethyl]-1H-imidazole [medetomidine] and derivatives thereof, macrocyclic lactones including avermectins and derivatives thereof such as ivermectine, spinosyns and derivatives thereof such as spinosad, capsaicins and derivatives thereof such as phenyl capsaicin, and enzymes such as oxidase, proteolytically, hemicellulolytically, cellulolytically, lipolytically and amylolytically active enzymes.

Preferred antifouling agents are zinc pyrithione, copper pyrithione, zinc ethylenebis(dithiocarbamate) [zineb], 4,5-dichloro-2-n-octyl-4-isothiazolin-3-one [DCOIT] and encapsulated 4,5-dichloro-2-n-octyl-4-isothiazolin-3-one [DCOIT]. Particularly preferred antifouling agents are zinc pyrithione and copper pyrithione.

The biocide is typically present in 0-20 % by dry weight of the coating composition, preferably 0-15 % by dry weight of the coating composition. The use of these antifouling agents is known in antifouling coatings and their use would be familiar to the skilled person. The antifouling agent may be encapsulated or adsorbed on an inert carrier or bonded to other materials for controlled release. These percentages refer to the amount of active antifouling agent present and not therefore to any carrier used.

### Additive oil

The coating composition of the present invention optionally comprises an additive oil. Preferably the coating composition of the present invention comprises 0-30 wt% and more preferably 5-20 wt% additive oil, based on the dry weight of the coating composition.

Suitable unreactive additive oils are silicone oils such as methylphenyl silicone oil, petroleum oils, polyolefin oils, polyaromatic oils, fluoro resins such as polytetrafluoroethylene or fluid fluorinated alkyl- or alkoxy-containing polymers, or lanolin and lanolin derivatives and other sterol(s) and/or sterol derivative(s) as disclosed in WO2013024106A1 or combinations thereof. A preferred unreactive additive oil is methylphenyl silicone oil.

A further additive oil optionally present in the coating compositions of the invention is fluorinated amphiphilic polymers/oligomers as described in WO2014131695.

The coating composition of the present invention optionally comprises hydrophilic-modified additive oils, such as non-reactive hydrophilic-modified polysiloxane oils. Suitable hydrophilic modified additive oils are hydrophilic modified polysiloxane oils as described in US 6107381 or hydrophilic modified sterol (s) and/or sterol derivative (s) as described in WO2016004961.

The non-reactive hydrophilic-modified polysiloxane oils are typically modified by the addition of non-ionic oligomeric or polymeric groups which can be polar and/or capable of hydrogen bonding, enhancing their interaction with polar solvents, in particular with water, or with other polar oligomeric or polymeric groups. Examples of these groups include, amides (e.g. poly(vinyl pyrrolidone), poly[N-(2-hydroxypropyl)methacrylamide]), poly(N,N- dimethacrylamide), acids (e.g. poly(acrylic acid)), alcohols (e.g. poly(glycerol), polyHEMA, polysaccharides, poly(vinyl alcohol)), ketones (polyketones), aldehydes (e.g. poly(aldehyde guluronate), amines (e.g. polyvinylamine), esters (e.g. polycaprolactones, poly(vinyl acetate)), ethers (e.g. poly(alkylene oxide)s like polyethylene glycol), polypropylene glycol)), imides (e.g. poly(2-methyl-2-oxazoline)), etc., including copolymers of the foregoing.

Preferably the hydrophilicity of the hydrophilic-modified additive oil is obtained by modification with poly(alkylene oxide) groups.

The one or more hydrophilic-modified additive oils are optionally present in the coating composition of the present invention in an amount of 0.01-30 %, e.g. 0.05-10 %, by dry weight. More preferably the one or more hydrophilic-modified additive oils comprises 0.05-7 % by dry weight and still more preferably 0.1-5 % by dry weight of the coating composition.

### Co-binders

Optionally a co-binder may be present in the coating composition of the present invention in addition to the polysiloxane-based binder and/or siloxane copolymer. Preferably the co-binder contains curing reactive groups that can react with the polysiloxane-based binder and/or siloxane copolymer in the curing reaction. Representative examples of such co-binders include silicone resins, silicone-epoxy resins, silicone-polyester resins, polyurethane-based binders, polyol-based binders such as acrylic-polyol binders, polyester-based binders and acrylic-based binders.

### Pigments

The coating composition of the invention preferably comprises one or more pigments. The pigments may be inorganic pigments, organic pigments or a mixture thereof. Inorganic pigments are preferred.

Representative examples of pigments include black iron oxide, red iron oxide, yellow iron oxide, titanium dioxide, zinc oxide, carbon black, graphite, red molybdate, yellow molybdate, zinc sulfide, antimony oxide, sodium aluminium sulfosilicates, quinacridones, phthalocyanine blue, phthalocyanine green, indanthrone blue, cobalt aluminium oxide, carbazoledioxazine, isoindoline orange, bis-acetoaceto-tolidiole, benzimidazolone, quinaphthalone yellow, isoindoline yellow, tetrachloroisoindolinone, and quinophthalone yellow, metallic flake materials (e.g. aluminium flakes). Preferred pigments are black iron oxide, red iron oxide, yellow iron oxide, phthalocyanine blue and titanium dioxide.

The amount of pigment present in the coating composition of the present invention is preferably 0 to 25 wt% and more preferably 0.5 to 15 wt% based on the dry weight of the coating composition.

### Solvent

The antifouling coating composition of the present invention preferably comprises a solvent. Suitable solvents for use in the compositions of the invention are commercially available.

Examples of suitable organic solvents and thinners are aromatic hydrocarbons such as xylene, toluene, mesitylene; ketones such as methyl ethyl ketone, methyl isobutyl ketone, methyl amyl ketone, methyl isoamyl ketone, cyclopentanone, cyclohexanone; esters such as butyl acetate, tert-butyl acetate, amyl acetate, isoamyl acetate, ethylene glycol methyl ether acetate, propylene glycol methyl ether acetate; ethers such as ethylene glycol dimethyl ether, diethylene glycol dimethyl ether, dibutyl ether, dioxane, tetrahydrofuran; alcohols such as n-butanol, isobutanol, benzyl alcohol; ether alcohols such as butoxyethanol, 1-methoxy-2-propanol; aliphatic hydrocarbons such as white spirit; and optionally a mixture of two or more solvents and thinners.

The amount of solvent present in the antifouling coating compositions of the present invention is preferably as low as possible as this minimizes the VOC content. Preferably solvent is present in the compositions of the invention in an amount of 0-35 wt% and more preferably 1-30 wt% based on the total weight of the composition. The skilled man will appreciate that the solvent content will vary depending on the other components present.

### Fillers

The coating composition of the present invention optionally comprises fillers.

Examples of fillers that can be used in the coating composition according to the present invention are zinc oxide, barium sulphate, calcium sulphate, calcium carbonate, silicas or silicates (such as talc, feldspar, and china clay) including fumed silica, bentonite and other clays, and solid silicone resins, which are generally condensed branched polysiloxanes. Some fillers such as fumed silica may have a thickening effect on the coating composition.

Preferred fillers are fumed silica fillers. The fumed silica fillers may have an untreated surface or a hydrophobically modified surface. Preferably the fumed silica filler has a hydrophobically modified surface. Examples of commercially available fumed silica fillers are TS-610, TS-530, EH-5, H-5, and M-5 from Cabot and Aerosil^{®} R972, Aerosil^{®} R974, Aerosil^{®} R976, Aerosil^{®} R104, Aerosil^{®} R202, Aerosil^{®} R208, Aerosil^{®} R805, Aerosil^{®} R812, Aerosil^{®} 816, Aerosil^{®} R7200, Aerosil^{®} R8200, Aerosil^{®} R9200, Aerosil^{®} R711 from Evonik.

The amount of fillers present in the coating composition of the present invention is preferably 0 to 25 wt%, more preferably 0.1 to 10 wt% and still more preferably 0.15 to 5 wt%, based on the dry weight of the coating composition.

### Additives

The coating composition of the present invention optionally comprises one or more additives. Examples of additives that may be present in the coating composition of the invention include reinforcing agents, thixotropic agents, thickening agents, anti-settling agents, dehydrating agents, dispersing agents, wetting agents, surfactants, binders, plasticizers, and dyes.

Examples of thixotropic agents, thickening agents and anti-settling agents are silicas such as fumed silicas, organo-modified clays, amide waxes, polyamide waxes, amide derivatives, polyethylene waxes, oxidised polyethylene waxes, hydrogenated castor oil wax, and mixtures thereof. Preferably thixotropic agents, thickening agents and anti-settling agents are each present in the composition of the invention in an amount of 0-10 wt%, more preferably 0.1-6 wt% and still more preferably 0.1-2.0 wt%, based on the dry weight of the composition.

The dehydrating agents and desiccants that may be used in the antifouling coating compositions include organic and inorganic compounds. The dehydrating agents can be hygroscopic materials that absorb water or binds water as crystal water, often refered to as desiccants. Examples of desiccants include calcium sulphate hemihydrate, anhydrous calcium sulphate, anhydrous magnesium sulphate, anhydrous sodium sulphate, anhydrous zinc sulphate, molecular sieves and zeolites. The dehydrating agent can be a compound that chemically reacts with water. Examples of dehydrating agents that reacts with water include orthoesters such as trimethyl orthoformate, triethyl orthoformate, tripropyl orthoformate, triisopropyl orthoformate, tributyl orthoformate, trimethyl orthoacetate, triethyl orthoacetate, tributyl orthoacetate and triethyl orthopropionate; ketals; acetals; enolethers; orthoborates such as trimethyl borate, triethyl borate, tripropyl borate, triisopropyl borate, tributyl borate and tri-tert-butyl borate; organosilanes such as trimethoxymethyl silane, vinyltrimethoxysilane, phenyltrimethoxysilane, tetraethoxysilane and ethyl polysilicate.

Preferably the dehydrating agent is present in the compositions of the invention in an amount of 0-5 wt%, more preferably 0.5-2.5 wt% and still more preferably 1.0-2.0 wt%, based on the dry weight of the composition.

### Composition and Paint

The present invention also relates to a method of preparing the composition as hereinbefore described wherein the components present in the composition are mixed. Any conventional production method may be used.

The composition as described herein may be prepared in a suitable concentration for use, e.g. in spray painting. In this case, the composition is itself a paint. Alternatively the composition may be a concentrate for preparation of paint. In this case, further solvent is added to the composition described herein to form paint. Preferred solvents are as hereinbefore described in relation to the composition.

After mixing, and optionally after addition of solvent, the antifouling coating composition or paint is preferably filled into a container. Suitable containers include cans, drums and tanks.

The antifouling coating composition may be supplied as a one-pack, as a two-pack or as a three-pack. Preferably the composition is supplied as a two-pack or as a three-pack and still more preferably as a three-pack.

When supplied as a one-pack, the composition is preferably supplied in a ready-mixed or ready to use form. Optionally the one-pack product may be thinned with solvents prior to application.

When supplied as a two pack, the first container preferably comprises copolymer as hereinbefore defined, polysiloxane-based binder and/or siloxane copolymer and optionally antifouling agent; and the second container preferably comprises crosslinking agent, curing agent and/or catalyst. Instructions for mixing the contents of the containers may optionally be provided.

When supplied as a three pack, the first container preferably comprises a polysiloxane-based binder and/or siloxane copolymer, a copolymer as hereinbefore defined and optionally an antifouling agent; the second container preferably comprises a crosslinking agent and/or a curing agent; and the third container preferably comprises a catalyst. Instructions for mixing the contents of the containers may optionally be provided.

The antifouling coating composition and paint of the invention preferably has a solids content of 35-90 wt%, more preferably 40-85 wt% and still more preferably 60-85 wt%.

Preferably the antifouling coating composition and paint of the invention has a content of volatile organic compounds (VOC) of 50 to 500 g/L, preferably 50 to 420 g/L, e.g. 50 to 390 g/L. VOC content can be calculated (ASTM D5201-01) or measured (US EPA method 24 or ISO 11890-1).

The coating composition of the present invention may be applied to any pretreated coating layers designed for polysiloxane based fouling release coatings. Examples of such coating layers are epoxy anticorrosive layers and silicone containing tie-layers designed to ensure adhesion between the substrate and the final polysiloxane based fouling release layer. One example of such a tie-layer is described in WO2013/107827. Optionally the tie-layer may contain an antifouling agent.

It is also possible to apply the coating composition according to the present invention on a substrate containing an aged anti-fouling coating layer or fouling release layer. Before the coating composition according to the present invention is applied to such an aged layer, this old layer is cleaned by high-pressure water washing to remove any fouling.

The coating composition according to the present invention may be applied in one or two or more layers. Preferably the coating composition according to the present invention is applied in one layer.

The dry film thickness of each of the coating layers of the coating composition of the present invention is preferably 50-500 µm, more preferably 100 - 400 µm, most preferably 150 - 300 µm.

The antifouling coating composition and paint of the invention can be applied to a whole or part of any article surface which is subject to marine fouling. The surface may be permanently or intermittently underwater (e.g. through tide movement, different cargo loading or swell). The article surface will typically be the hull of a vessel or surface of a fixed marine object such as an oil platform or buoy. Application of the coating composition and paint can be accomplished by any convenient means, e.g. via painting (e.g. with brush or roller) or more preferably spraying the coating onto the article. Typically the surface will need to be separated from the seawater to allow coating. The application of the coating can be achieved as conventionally known in the art. After the coating is applied, it is preferably dried and/or cured.

The invention will now be described by the following non-limiting examples wherein:

### EXAMPLES

### Materials

The crosslinking agent, catalyst, biocide, additive oil, pigment, solvent and additives were all obtained from commercial suppliers.

The polysiloxane-based polymers (i.e. binder) were obtained commercially.

The copolymers and siloxane copolymer were prepared as described below. The monomers used in the synthesis of the copolymers are described in Table 1 below.

**Table 1**

| Monomer | Name | Abbreviation |
|---|---|---|
| 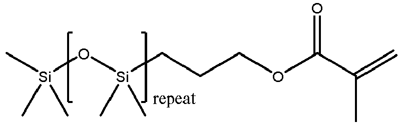 | Monomethacryloyloxypropyl terminated polydimethylsiloxane¹ | PDMS-MA |
| 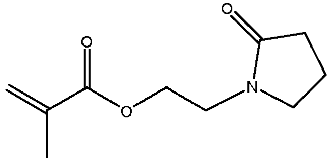 | 2-(1-pyrrolidonyl)ethyl methacrylate | PEMA |
| 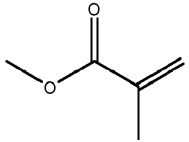 | Methyl methacrylate | MMA |
| 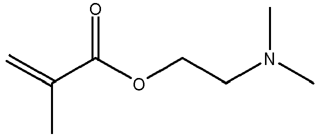 | 2-(Dimethylamino)ethyl methacrylate | DMAEMA |
| 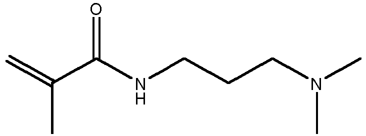 | 3-(dimethylamino)propyl methacrylamide | DMAPMA |
| 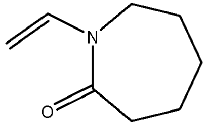 | N-Vinylcaprolactam | NVC |
| 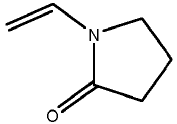 | N-Vinylpyrrolidone | NVP |
| 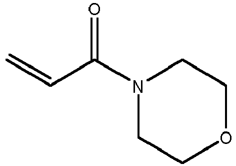 | 4-Acryloylmorpholine | MoA |
| 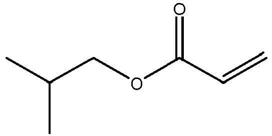 | Isobutyl acrylate | iBA |

| | | |
|---|---|---|
| ¹X-22-174 ASX (functional group equivalent weight 900 g/mol) from ShinEtsu | | |

### Determination Methods

### Determination of solids content of the polymer solutions

The solids content of the polymer solutions was determined in accordance with ISO 3251:2008. Samples of 0.5 g ± 0.1 g polymer solution were dried in a ventilated oven at 105 °C for 3 hours. The weight of the residual material is considered to be the non-volatile matter (NVM). The non-volatile matter content is expressed in weight percent. The result given in Table 3 is the average of two parallels.

### Determination of polymer average molecular weights distribution

The polymers were characterised by Gel Permeation Chromatography (GPC) measurement. The molecular weight distribution (MWD) was determined using a Malvern Omnisec Resolve and Reveal system with two PLgel 5 µm Mixed-D columns from Agilent in series. The columns were calibrated by conventional calibration using narrow polystyrene standards. The analysis conditions were as set out in Table 2 below.

**Table 2**

| | |
|---|---|
| Detector | RI |
| Cell volume | 12 µl |
| Column Set | Agilent PLgel 5 µm Mixed-D, 2 columns in series |
| Mobile Phase | THF |
| Flow rate | 1 ml/min |
| Injection volume | 100 µl |
| Autosampler Temperature | 25 °C |
| Column Oven Temperature | 35 °C |
| Detector Oven Temperature | 35 °C |
| Data Processing | Omnisec 5.1 |
| Calibration standards | Agilent Polystyrene Medium EasiVials (4 ml) Red, Yellow and Green |

Samples were prepared by dissolving an amount of polymer solution corresponding to 25 mg dry polymer in 5 ml THF. The samples were kept for a minimum of 3 hours at room temperature prior to sampling for the GPC measurements. Before analysis the samples were filtered through 0.45 µm Nylon filters. The weight-average molecular weight (Mw) is reported.

### General procedure for preparation of copolymer solutions 1 to 5

40 parts by weight of solvent (xylene/1-methoxy-2-propanol 50:50) was charged to a temperature-controlled reaction vessel equipped with a stirrer, a condenser, a nitrogen inlet and a feed inlet. The reaction vessel was heated and maintained at the reaction temperature of 95°C. A pre-mix of 50 parts by weight monomers and initiator (2,2'-azobis(2-methylbutyronitrile) (AMBN), wt% given in Table 3) and 10 parts by weight solvent (xylene/1-methoxy-2-propanol, 50:50) was prepared. The pre-mix was charged to the reaction vessel at a constant rate over 2 hours under a nitrogen atmosphere. Further the reaction vessel was maintained at the reaction temperature of 95 °C for an additional 3 hours. The copolymer solution was then cooled to room temperature. The wt% of the monomers and the properties of the copolymer solutions are presented in Table 3 below.

**Table 3**

| Copolymer | Monomer ratio (wt %) | | | Initiator AMBN (wt%) | Solid content (wt%) | Mw GPC | PDI |
|---|---|---|---|---|---|---|---|
| | PEMA | PDMS-MA | MMA | | | | |
| 1 | 14 | 64 | 21 | 1.4 | 49 | 19011 | 2.2 |
| 2 | 11 | 75 | 14 | 1.1 | 52 | 22 728 | 1.7 |
| 3 | 9 | 82 | 9 | 0.9 | 50 | 25 184 | 1.7 |
| 4 | 7 | 90 | 3 | 0.7 | 50 | 30 060 | 1.7 |
| 5 | 10 | 89 | 1 | 0.6 | 51 | 31 028 | 1.7 |

### General procedure for preparation of copolymer solutions 6 to 13

The copolymer solutions were prepared using the same procedure as described above for copolymer solutions 1 to 5 but with xylene as the only solvent in the reaction vessel and the monomer feed solution. The wt% of monomers and initiator and the properties of the copolymer solutions are presented in Table 3B below.

### General procedure for preparation of copolymer solutions 14 to 21

40 parts by weight of solvent (xylene) and NVP or NVC were charged to a temperature-controlled reaction vessel equipped with a stirrer, a condenser, a nitrogen inlet and a feed inlet. The reaction vessel was heated and maintained at the reaction temperature of 95 °C. A pre-mix of PDMS-MA, MMA and initiator [2,2'-azobis(2-methylbutyronitrile) (AMBN)] and 10 parts by weight solvent (xylene) was prepared. The pre-mix was charged to the reaction vessel at a constant rate over 2 hours under a nitrogen atmosphere. The reaction vessel was then maintained at the reaction temperature of 95 °C for an additional 3 hours. The copolymer solution was then cooled to room temperature. The wt% of monomers and initiator and the properties of the copolymer solutions are presented in Table 3B below.

### General procedure for preparation of comparative copolymer solutions 1 to 2

42.86 parts by weight of solvent (methyl amyl ketone) was charged to a temperature-controlled reaction vessel equipped with a stirrer, a condenser, a nitrogen inlet and a feed inlet. The reaction vessel was heated and maintained at the reaction temperature of 100 °C. A pre-mix of 100 parts by weight monomers and 4.0 parts by weight initiator [2,2'-azobis(2-methylbutyronitrile) (AMBN)] was prepared. The pre-mix was charged to the reaction vessel at a constant rate over 4 hours under a nitrogen atmosphere. The reaction vessel was then maintained at the reaction temperature of 100 °C for an additional 2 hours. The copolymer solution was then cooled to room temperature. The wt% of monomers and initiator and the properties of the copolymer solutions are presented in Table 3B below.

**Table 3B**

| Copolymer | Monomer ratio (wt %) | | | | | | | | | Initiator AMBN (wt%)* | Solid content (wt%) | Mw GPC | PDI |
|---|---|---|---|---|---|---|---|---|---|---|---|---|---|
| | Monomer (A) | | | | | | Monomer (B) | Monomer (C) | | | | | |
| | PEMA | DMAEMA | DMAPMA | NVC | NVP | MoA | PDMS-MA | MMA | iBA | | | | |
| 6 | 50 | - | - | - | - | - | 50 | - | - | 1.21 | 50 | 19 893 | 2.2 |
| 7 | 20 | - | - | - | - | - | 80 | - | - | 0.75 | 49 | 28 882 | 1.7 |
| 8 | 11 | - | - | - | - | - | 82 | 9 | - | 0.91 | 49 | 27 375 | 1.7 |
| 9 | - | 30 | - | - | - | - | 50 | 20 | - | 1.75 | 50 | 18 243 | 2.2 |
| 10 | - | 8 | - | - | - | - | 78 | 14 | - | 1.09 | 50 | 23 174 | 2.8 |
| 11 | - | - | 30 | - | - | - | 50 | 20 | - | 1.44 | 49 | 18 134 | 2.5 |
| 12 | - | - | 16 | - | - | - | 64 | 20 | - | 1.42 | 50 | 18 682 | 2.3 |
| 13 | - | - | 8 | - | - | - | 78 | 14 | - | 1.07 | 49 | 22 916 | 1.6 |
| 14 | - | - | - | 30 | - | - | 70 | - | - | 1.15 | 49 | 27 399 | 2.5 |
| 15 | - | - | - | 30 | - | - | 62 | 8 | - | 1.43 | 47 | 27 105 | 2.4 |
| 16 | - | - | - | 19 | - | - | 77 | 4 | - | 1.04 | 49 | 31 192 | 2.0 |
| 17 | - | - | - | 10 | - | - | 90 | - | - | 0.67 | 49 | 31 230 | 1.7 |
| 18 | - | - | - | - | 30 | - | 50 | 20 | - | 1.65 | 49 | 18 160 | 2.4 |
| 19 | - | - | - | - | 24 | - | 61 | 15 | - | 1.72 | 49 | 19 292 | 2.2 |
| 20 | - | - | - | - | 19 | - | 77 | 4 | - | 1.17 | 50 | 24 160 | 2.2 |
| 21 | - | - | - | - | 8 | - | 78 | 14 | - | 1.17 | 49 | 26 983 | 2.7 |
| Comparative 1 | - | - | - | - | 20 | - | - | - | 80 | 4.00 | 71 | 12 377 | 2.3 |
| Comparative 2 | - | - | - | - | - | 30 | - | - | 70 | 4.00 | 72 | 11 949 | 2.5 |

| | | | | | | | | | | | | | |
|---|---|---|---|---|---|---|---|---|---|---|---|---|---|
| * wt% of the total amount of monomers as given in the table, i.e. wt% of 100 parts by weight of total monomers | | | | | | | | | | | | | |

### Preparation of siloxane copolymer (i.e. poly(ester-siloxane) binder)

In a multi-neck flask with nitrogen line, stirring device and internal thermometer, α,ω - hydroxyalkyl siloxane (Tegomer^{®} H-Si 2515, from Evonik) (2500.0 g, 1.16 eq.mol (hydroxyl)), diethyl succinate (98.9 g, 1.13 eq.mol (ester)), and titanium(IV) butoxide (2.6 g, 0.1 wt%) were charged. The reaction mixture was stirred at 200 °C for 6 hours under smooth nitrogen atmosphere stripping conditions. Residual alcohol by-product was removed by vacuum distillation (6 hours, 10 mbar).
GPC data: Mn 19 400, Mw 62 900, PDI 3.2

### Preparation of coating compositions

The coating compositions were prepared by first mixing the components shown in part (A) of Tables 5 to 10 below using a high-speed dissolver equipped with an impeller disc. The copolymers of the present invention were added to the coating composition after the grinding phase. The components in part (B) were mixed with the components in part (A) shortly before application of the coating.

### Testing of antifouling performance in Florida (USA)

PVC panels were coated with one coat of Jotun Safeguard Universal ES primer and one coat of Jotun Sealion Tiecoat Plus using airless spray within specified conditions. The coating compositions of examples 1-5 and comparative examples 1 and 2 were applied to the pre-coated PVC panels using a film applicator with a 300 µm clearance. Comparative examples 1 and 2 are comparative examples wherein no copolymer is present in the composition. The panels were used for static testing on a raft in Florida where the panels were submerged 0.5-1.5 m below the sea surface. The panels were evaluated by visual inspection and rated by the scale shown in Table 4 below.

**Table 4**

| Rating | Fouling | Area covered by fouling |
|---|---|---|
| 0 | Light slime | Less than 20% |
| 1 | Light slime | 20-50 % |
| 2 | Light slime | More than 50% |
| 3 | Dense slime | Less than 20% |
| 4 | Dense slime | 20- 50% |
| 5 | Dense slime | More than 50% |
| 6* | Algae | Less than 20% |
| 7* | Algae | 20-50% |
| 8* | Algae | More than 50% |
| 9* | Hard fouling | Less than 20% |
| 10* | Hard fouling | 20-50% |
| 11* | Hard fouling | More than 50% |

| | | |
|---|---|---|
| *Slime may also be present on these panels. Algae and hard fouling such as barnacles and mussels are given the highest rating because they have the highest effect on the frictional resistance and fuel consumption. | | |

The fouling performance of the coating compositions in examples 1-5 and comparative examples 1 and 2 are set out in Tables 5 and 6 below. The ingredients are given in grams.

### Testing of antifouling performance in Singapore

### Examples 6-17 and comparative examples 3-8:

PVC panels were coated with a first coat of Jotun Safeguard Universal ES primer and a second coat of Jotun SeaQuest Tiecoat using airless spray within specified conditions. The coating compositions of examples 6 to 17 and comparative examples 3 to 8 in Tables 7 and 8 were applied to the PVC panels pre-coated with primer and tiecoat using a film applicator with a 300 µm clearance.

### Examples 18-30 and comparative example 9:

PVC panels were coated with one coat of Jotun Safeguard Universal ES primer. The coating compositions of examples 18 to 30 and comparative example 9 containing siloxane copolymer (i.e. poly(ester-siloxane) binder) in Tables 9 and 10 were applied directly to the PVC panels pre-coated with primer using a film applicator with a 300 µm clearance.

All panels were used for static testing on a raft in Singapore where the panels were submerged 0.3-1.3 m below the sea surface. The panels were evaluated by visual inspection and rated for slime, algae and animals using the scale shown in Table 4B below. In this rating, there is considered to be an increasing severity from slime (least severe) to algae (intermediate severity) to animals (most severe) due to the increased effect for each category on frictional resistance and fuel consumption of a moving vessel.

**Table 4B**

| Rating | Area covered by fouling |
|---|---|
| 0 | No fouling |
| 1 | Less than 10% |
| 2 | 11 - 20 % |
| 3 | 21 - 30% |
| 4 | 31 - 50 % |
| 5 | More than 50 % |

The coating composition and antifouling performance of examples 6 to 30 and comparative examples 3 to 9 are given in Tables 7 to 10 below. The amounts of the ingredients are given in grams.

**Table 5**

| Example | Comparative example 1 | 1 | 2 | 3 |
|---|---|---|---|---|
| Part (A) | | | | |
| α, ω hydroxypolydimethylsiloxane (3500 mPas)¹ | 63.0 | 59.0 | 59.0 | 59.0 |
| Hydrophobic silica² | 0.5 | 0.5 | 0.5 | 0.5 |
| Iron oxide red | 3.6 | 3.4 | 3.4 | 3.4 |
| Methyl phenyl polysiloxane oil | 10.0 | 10.0 | 10.0 | 10.0 |
| Xylene | 8.9 | 8.4 | 8.4 | 8.4 |
| 1-Methoxy-2-propanol | 14.1 | 13.3 | 13.3 | 13.3 |
| Copolymer solution 3 | | 10.0 | | |
| Copolymer solution 4 | | | 10.0 | |
| Copolymer solution 5 | | | | 9.8 |
| Total part (A) | 100.1 | 104.6 | 104.6 | 104.4 |
| | | | | |

| Part (B) | | | | |
|---|---|---|---|---|
| Ethyl silicate³ | 4.2 | 4.4 | 4.4 | 4.4 |
| Dibutyl tin diacetate | 0.2 | 0.2 | 0.2 | 0.2 |
| 1-Methoxy-2-propanol | 4.0 | 4.2 | 4.2 | 4.2 |
| Total part (B) | 8.4 | 8.8 | 8.8 | 8.8 |
| | | | | |

| **Antifouling performance** | | | | |
|---|---|---|---|---|
| Rating performance on raft in Florida (8 weeks) | 5 | 2 | 2 | 3 |

| | | | | |
|---|---|---|---|---|
| ¹Polymer OH3.5 (Evonik). ²Aerosil^{®} R972 (Evonik). ³Wacker^{®} TES 40 WN (Wacker) | | | | |

**Table 6**

| Example | Comparative example 2 | 4 | 5 |
|---|---|---|---|
| Part (A) | | | |
| α,ω hydroxypolydimethylsiloxane (3500 mPas)¹ | 52.0 | 52.0 | 52.0 |
| Copper pyrithione | 8.0 | 8.0 | 8.0 |
| Hydrophobic silica² | 0.5 | 0.5 | 0.5 |
| Iron oxide red | 3.3 | 3.3 | 3.3 |
| Methyl phenyl polysiloxane oil | 10.0 | 10.0 | 10.0 |
| Xylene | 8.0 | 8.0 | 8.0 |
| 1-Methoxy-2-propanol | 13.0 | 13.0 | 13.0 |
| Copolymer solution 2 | | 9.6 | |
| Copolymer solution 3 | | | 10.0 |
| Total part (A) | 94.1 | 104.4 | 104.8 |
| | | | |

| Part (B) | | | |
|---|---|---|---|
| Ethyl silicate³ | 3.9 | 4.4 | 4.4 |
| Dibutyl tin diacetate | 0.2 | 0.2 | 0.2 |
| 1-Methoxy-2-propanol | 3.7 | 4.2 | 4.2 |
| Total part (B) | 7.80 | 8.7 | 8.7 |
| | | | |

| **Antifouling performance** | | | |
|---|---|---|---|
| Rating performance on raft in Florida (16 weeks) | 5 | 3 | 4 |

| | | | |
|---|---|---|---|
| ¹Polymer OH3.5 (Evonik). ²Aerosil^{®} R972 (Evonik). ³Wacker^{®} TES 40 WN (Wacker) | | | |

The results show that the antifouling coating composition of the invention comprising the copolymer in combination with a polysiloxane-based binder has significantly improved antifouling performance, especially against soft fouling like algae and slime, over a comparable composition comprising a polysiloxane-based binder, but lacking the copolymer. This shows that the copolymer improves the antifouling performance of the coating composition. It is believed that this is achieved by the copolymer migrating to the surface of the coating where the heteroatom containing polar groups forms a hydrogel-like structure that helps to prevent growth and attachment or marine fouling such as algae and slime.

**Table 7: Formulations without biocides**

| Example | 6 | 7 | 8 | 9 | Comp. 3 | Comp. 4 | Comp. 5 |
|---|---|---|---|---|---|---|---|
| Part (A) | | | | | | | |
| α,ω-hydroxypolydimethyisiloxane (20 000 mPas)¹ | 35.5 | 35.5 | 35.5 | 35.5 | 35.5 | 35.5 | 35.5 |
| α,ω-hydroxypolydimethylsiloxane (500 mPas)² | 35.5 | 35.5 | 35.5 | 35.5 | 35.5 | 35.5 | 35.5 |
| Hydrophobic silica³ | 0.5 | 0.5 | 0.5 | 0.5 | 0.5 | 0.5 | 0.5 |
| Iron oxide black | 0.5 | 0.5 | 0.5 | 0.5 | 0.5 | 0.5 | 0.5 |
| Titanium dioxide | 2.4 | 2.4 | 2.4 | 2.4 | 2.4 | 2.4 | 2.4 |
| Xylene | 8.5 | 8.5 | 8.5 | 8.5 | 8.5 | 8.5 | 8.5 |
| 1-Methoxy-2-propanol | 13.5 | 13.5 | 13.5 | 13.5 | 13.5 | 13.5 | 13.5 |
| Copolymer solution 13 | 10.3 | | | | | | |
| Copolymer solution 14 | | | | 10.2 | | | |
| Copolymer solution 16 | | 10.3 | | | | | |
| Copolymer solution 19 | | | 10.2 | | | | |
| Comparative copolymer solution 1 | | | | | | 7.1 | |
| Comparative copolymer solution 2 | | | | | | | 6.9 |
| Total part (A) | 106.7 | 106.7 | 106.6 | 106.6 | 96.4 | 103.5 | 103.3 |
| Part (B) | | | | | | | |
| Ethyl silicate⁴ | 4.5 | 4.5 | 4.5 | 4.5 | 4.0 | 4.3 | 4.3 |
| Dibutyltin diacetate | 0.2 | 0.2 | 0.2 | 0.2 | 0.2 | 0.2 | 0.2 |
| 1-Methoxy-2-propanol | 4.2 | 4.2 | 4.2 | 4.2 | 3.8 | 4.2 | 4.2 |
| Total part (B) | 8.9 | 8.9 | 8.9 | 8.9 | 8.0 | 8.7 | 8.7 |
| Antifouling performance on raft in Singapore (10 weeks) | | | | | | | |
| Slime | 2 | 2 | 2 | 4 | 5 | 4 | 5 |
| Algae | 0 | 0 | 0 | 0 | 1 | 0 | 1 |
| Animals | 2 | 2 | 2 | 2 | 5 | 5 | 5 |

| | | | | | | | |
|---|---|---|---|---|---|---|---|
| ¹Polymer OH20 (Evonik). ²Silopren E05 (Momentive). ³Aerosil^{®} R972 (Evonik). ⁴Wacker^{®} TES 40 WN (Wacker) | | | | | | | |

**Table 8: Formulations with biocide**

| Example | 10 | 11 | 12 | 13 | 14 | 15 | 16 | 17 | Comp. 6 | Comp. 7 | Comp. 8 |
|---|---|---|---|---|---|---|---|---|---|---|---|
| Part (A) | | | | | | | | | | | |
| α,ω-hydroxypolydimethylsiloxane¹ | 32.1 | 32.1 | 32.1 | 32.1 | 32.1 | 32.1 | 32.1 | 32.1 | 32.1 | 32.1 | 32.1 |
| α,ω-hydroxypolydimethylsiloxane² | 32.1 | 32.1 | 32.1 | 32.1 | 32.1 | 32.1 | 32.1 | 32.1 | 32.1 | 32.1 | 32.1 |
| Copper pyrithione | 8.1 | 8.1 | 8.1 | 8.1 | 8.1 | 8.1 | 8.1 | 8.1 | 8.1 | 8.1 | 8.1 |
| Hydrophobic silica³ | 0.5 | 0.5 | 0.5 | 0.5 | 0.5 | 0.5 | 0.5 | 0.5 | 0.5 | 0.5 | 0.5 |
| Iron oxide black | 0.5 | 0.5 | 0.5 | 0.5 | 0.5 | 0.5 | 0.5 | 0.5 | 0.5 | 0.5 | 0.5 |
| Titanium dioxide | 2.3 | 2.3 | 2.3 | 2.3 | 2.3 | 2.3 | 2.3 | 2.3 | 2.3 | 2.3 | 2.3 |
| Xylene | 20.5 | 20.5 | 20.5 | 20.5 | 20.5 | 20.5 | 20.5 | 20.5 | 20.5 | 20.5 | 20.5 |
| Copolymer solution 11 | 10.3 | | | | | | | | | | |
| Copolymer solution 12 | | 10.0 | | | | | | | | | |
| Copolymer solution 16 | - | | 10.3 | | | | | | | | |
| Copolymer solution 17 | | | | 10.1 | | | | | | | |
| Copolymer solution 18 | | | | | 10.2 | | | | | | |
| Copolymer solution 19 | | | | | | 10.2 | | | | | |
| Copolymer solution 20 | | | | | | | 10.1 | | | | |
| Copolymer solution 21 | | | | | | | | 10.3 | | | |
| Comparative copolymer solution 1 | | | | | | | | | | 7.1 | |
| Comparative copolymer solution 2 | | | | | | | | | | | 6.9 |
| Total part (A) | 106.4 | 106.1 | 106.4 | 106.2 | 106.3 | 106.3 | 106.2 | 106.4 | 96.1 | 103.2 | 103.0 |
| Part (B) | | | | | | | | | | | |
| Ethyl silicate⁴ | 4.4 | 4.4 | 4.4 | 4.4 | 4.4 | 4.4 | 4.4 | 4.4 | 4.0 | 4.3 | 4.3 |
| Dibutyltin diacetate | 0.2 | 0.2 | 0.2 | 0.2 | 0.2 | 0.2 | 0.2 | 0.2 | 0.2 | 0.2 | 0.2 |
| 1-Methoxy-2-propanol | 4.2 | 4.2 | 4.2 | 4.2 | 4.2 | 4.2 | 4.2 | 4.2 | 3.8 | 4.2 | 4.2 |
| Total part (B) | 8.8 | 8.8 | 8.8 | 8.8 | 8.8 | 8.8 | 8.8 | 8.8 | 8.0 | 8.7 | 8.7 |
| Antifouling performance on raft in Singapore (10 weeks) | | | | | | | | | | | |
| Slime | 3 | 3 | 3 | 2 | 1 | 1 | 2 | 2 | 5 | 4 | 4 |
| Algae | 0 | 0 | 0 | 0 | 0 | 0 | 0 | 0 | 0 | 0 | 1 |
| Animals | 0 | 0 | 0 | 0 | 0 | 0 | 0 | 0 | 1 | 1 | 2 |

| | | | | | | | | | | | |
|---|---|---|---|---|---|---|---|---|---|---|---|
| ¹Polymer OH20 (20000 mPas) (Evonik). ²Silopren E05 (500 mPas) (Momentive). ³Aerosi^{®} R972 (Evonik). ⁴Wacker^{®} TES 40 WN (Wacker) | | | | | | | | | | | |

**Table 9: Formulations with siloxane copolymer (i.e. poly(ester siloxane) binder) without biocides**

| Example | 18 | 19 | 20 | 21 | 22 | 23 | 24 | 25 | Comp. 9 |
|---|---|---|---|---|---|---|---|---|---|
| Part (A) | | | | | | | | | |
| Poly(ester-siloxane) binder | 76.5 | 76.5 | 76.5 | 76.5 | 76.5 | 76.5 | 76.5 | 76.5 | 80.7 |
| Hydrophobic silica¹ | 1.0 | 1.0 | 1.0 | 1.0 | 1.0 | 1.0 | 1.0 | 1.0 | 1.1 |
| Iron oxide black | 0.6 | 0.6 | 0.6 | 0.6 | 0.6 | 0.6 | 0.6 | 0.6 | 0.6 |
| Titanium dioxide | 2.5 | 2.5 | 2.5 | 2.5 | 2.5 | 2.5 | 2.5 | 2.5 | 2.6 |
| Xylene | 14.2 | 14.2 | 14.2 | 14.2 | 14.2 | 14.2 | 14.2 | 14.2 | 15.0 |
| Copolymer solution 6 | 10.0 | | | | | | | | |
| Copolymer solution 7 | | 10.0 | | | | | | | |
| Copolymer solution 8 | | | 10.0 | | | | | | |
| Copolymer solution 15 | | | | 10.0 | | | | | |
| Copolymer solution 16 | | | | | 10.0 | | | | |
| Copolymer solution 17 | | | | | | 10.0 | | | |
| Copolymer solution 18 | | | | | | | 10.0 | | |
| Copolymer solution 20 | | | | | | | | 10.0 | |
| Total part (A) | 104.7 | 104.7 | 104.7 | 104.7 | 104.7 | 104.7 | 104.7 | 104.7 | 100.0 |
| Part (B) | | | | | | | | | |
| Aliphatic polyisocyanate² | 5.0 | 5.0 | 5.0 | 5.0 | 5.0 | 5.0 | 5.0 | 5.0 | 5.3 |
| Dibutyltin dilaurate | 0.2 | 0.2 | 0.2 | 0.2 | 0.2 | 0.2 | 0.2 | 0.2 | 0.2 |
| n-Butyl acetate | 5.0 | 5.0 | 5.0 | 5.0 | 5.0 | 5.0 | 5.0 | 5.0 | 5.3 |
| Total part (B) | 10.2 | 10.2 | 10.2 | 10.2 | 10.2 | 10.2 | 10.2 | 10.2 | 10.8 |
| Antifouling performance on raft in Singapore (10 weeks) | | | | | | | | | |
| Slime | 4 | 3 | 4 | 4 | 4 | 3 | 4 | 5 | 4 |
| Algae | 0 | 2 | 3 | 2 | 3 | 3 | 0 | 1 | 3 |
| Animals | 0 | 0 | 0 | 0 | 0 | 0 | 0 | 0 | 2 |

| | | | | | | | | | |
|---|---|---|---|---|---|---|---|---|---|
| ¹ Aerosil^{®} R972 (Evonik). ² Desmodur^{®} Z 4470 BA (Covestro) | | | | | | | | | |

**Table 10: Formulations with siloxane copolymer (poly(ester siloxane) binder) and biocide**

| Example | 26 | 27 | 28 | 29 | 30 |
|---|---|---|---|---|---|
| Part (A) | | | | | |
| Poly(ester-siloxane) binder | 71.1 | 71.1 | 71.1 | 71.1 | 71.1 |
| Copper pyrithione | 5.7 | 5.7 | 5.7 | 5.7 | 5.7 |
| Hydrophobic silica¹ | 1.0 | 1.0 | 1.0 | 1.0 | 1.0 |
| Iron oxide black | 0.6 | 0.6 | 0.6 | 0.6 | 0.6 |
| Titanium dioxide | 2.4 | 2.4 | 2.4 | 2.4 | 2.4 |
| Xylene | 13.7 | 13.7 | 13.7 | 13.7 | 13.7 |
| Copolymer solution 6 | 10.0 | | | | |
| Copolymer solution 7 | | 10.0 | | | |
| Copolymer solution 15 | | | 10.0 | | |
| Copolymer solution 18 | | | | 10.0 | |
| Copolymer solution 20 | | | | | 10.0 |
| Total part (A) | 104.5 | 104.5 | 104.5 | 104.5 | 104.5 |
| | | | | | |

| Part (B) | | | | | |
|---|---|---|---|---|---|
| Aliphatic polyisocyanate² | 4.6 | 4.6 | 4.6 | 4.6 | 4.6 |
| Dibutyltin dilaurate | 0.2 | 0.2 | 0.2 | 0.2 | 0.2 |
| n-Butyl acetate | 4.6 | 4.6 | 4.6 | 4.6 | 4.6 |
| Total part (B) | 9.5 | 9.5 | 9.5 | 9.5 | 9.5 |
| | | | | | |

| Antifouling performance on raft in Singapore (10 weeks) | | | | | |
|---|---|---|---|---|---|
| Slime | 1 | 1 | 2 | 1 | 2 |
| Algae | 0 | 0 | 0 | 0 | 0 |
| Animals | 0 | 0 | 0 | 0 | 0 |

| | | | | | |
|---|---|---|---|---|---|
| ¹ Aerosil^{®} R972 (Evonik). ² Desmodur^{®} Z 4470 BA (Covestro) | | | | | |

### Discussion

The results in Table 7 show that the antifouling coating composition examples 6 to 9 of the invention comprising the copolymer in combination with a polysiloxane-based binder have significantly improved antifouling performance, especially against animal fouling, over comparable composition example 3 lacking the copolymer and comparative composition examples 4 to 5 comprising comparative copolymers without monomer (B).

The results in Table 8 show that the antifouling coating composition examples 10 to 17 of the invention comprising the copolymer in combination with a polysiloxane-based binder and copper pyrithione as biocide have significantly improved antifouling performance, over comparable composition example 6 lacking the copolymer and comparative composition examples 7 to 8 comprising comparative copolymers without monomer (B).

The results in Table 9 show that the antifouling coating composition examples 18 to 25 of the invention comprising the copolymer in combination with a siloxane copolymer, specifically a poly(ester siloxane) binder, have significantly improved antifouling performance, especially against animal fouling, over comparable composition example 9 lacking the copolymer.

The results in Table 10 show that the antifouling coating composition examples 26 to 30 of the invention comprising the copolymer in combination with a siloxane copolymer, specifically a poly(ester siloxane) binder, and copper pyrithione as biocide have a strong antifouling performance, especially against animal fouling.

## Claims

1. A copolymer comprising repeat units of formulae (A), (B1) and/or (B2) and optionally (C): 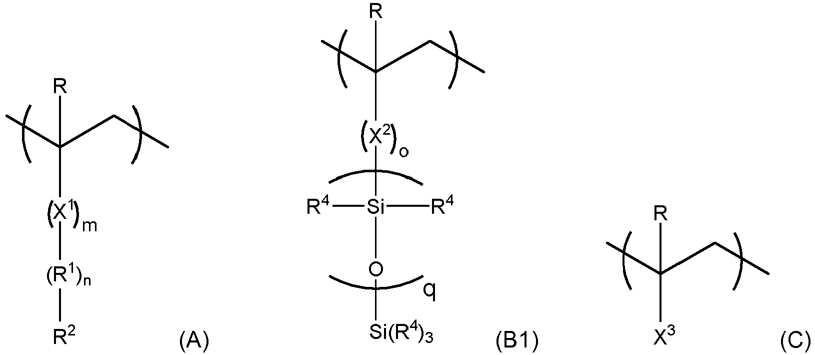 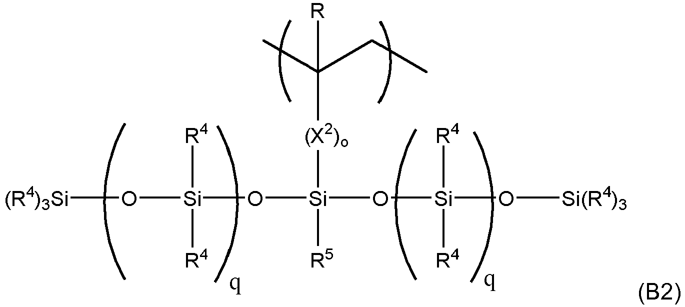 wherein
in formula (A)
R is selected from H and C₁₋₆ alkyl;
X¹ is selected from COO, CONH and OCO;
m is 0 or 1;
R¹ is selected from substituted or unsubstituted, linear or branched, C₁₋₈ alkylene;
n is 0 or 1; and
R² is a substituted or unsubstituted heterocyclyl, NR^{x}R^{y}, NHCOR^{x} or CONR^{x}R^{y}, wherein R^{x} and R^{y} are independently selected from substituted or unsubstituted, linear or branched, C₁₋₈ alkyl,
in formulae (B1) and (B2)
R is selected from H and C₁₋₆ alkyl; and preferably H and methyl X² is selected from COOR³ and OCOR³ and preferably COOR³;
o is 0 or 1, preferably 1;
R³ is selected from substituted or unsubstituted, linear or branched, C₁₋₈ alkylene;
each R⁴ is independently selected from C₁₋₁₀ alkyl and C₅₋₁₀ aryl; and
in formula (B1)
q is an integer from 1 to 160;
and in formula (B2)
q is 0 or an integer from 1 to 80
R⁵ is selected from C₁₋₁₀ alkyl, C₅₋₁₀ aryl or O-Si(R⁶)₃, wherein R⁶ is independently selected from C₁₋₁₀ alkyl and C₅₋₁₀ aryl;
in formula (C):
R is selected from H and C₁₋₆ alkyl; and
X³ is selected from COOH, COOR⁷, OCOR⁷,OH or OR⁷ wherein R⁷ is selected from substituted or unsubstituted, linear or branched, C₁₋₈ alkyl;
wherein said copolymer comprises 1-40 wt% of repeat unit (A), a total of 10-90 wt% of repeat units (B1) and/or (B2) and 0 to 70 wt% of repeat unit (C).

2. A copolymer as claimed in claim 1 further comprising a repeat unit of formula (D): 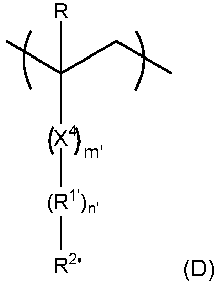 wherein in formula (D)
R is selected from H and C₁₋₆ alkyl;
X⁴ is selected from COO and OCO;
m' is 0 or 1;
R¹ is selected from substituted or unsubstituted, linear or branched, C₁₋₈ alkylene;
n' is 0 or 1; and
R² is polyalkylene oxide.

3. A copolymer as claimed in claim 1 or 2, wherein n is 0 and preferably m is 0.

4. A copolymer as claimed in claim 1 or 2, wherein n is 1 and R¹ is unsubstituted, linear C₁₋₃ alkylene.

5. A copolymer as claimed in any preceding claim, wherein R² is a heterocyclyl or NR^{x}R^{y}, wherein R^{x} and R^{y} are independently selected from C₁₋₃ alkyl.

6. A copolymer as claimed in any preceding claim, wherein each R⁴ is independently selected from C₁₋₄ alkyl.

7. A copolymer as claimed in any preceding claim, wherein said copolymer comprises 5-35 wt% of repeat unit (A) and/or a total of 30-90 wt% of repeat units (B1) and/or (B2) and/or 0.5 to 50 wt% of repeat unit (C) and/or 0 to 30 wt% of repeat unit (D) and/or said copolymer has a weight average molecular weight of 10,000 to 50,000, more preferably 15,000 to 40,000.

8. A method of preparing a copolymer as claimed in any one of claims 1 to 7, comprising:
polymerising monomers of each of formula (a) and (b1) and/or (b2), and optionally formula (c): 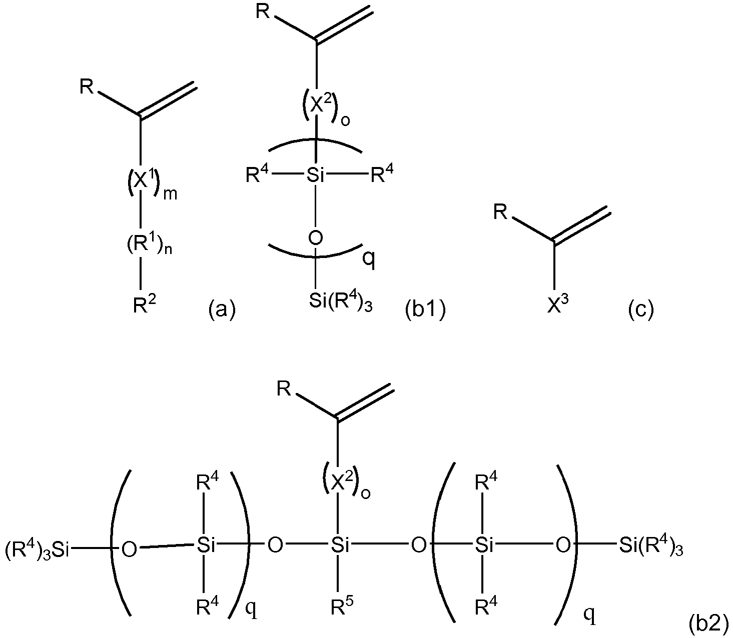
wherein
R, X¹, X², X³, R¹, R², R³, R⁴, m, n, o and q are as defined in claim 1

9. An antifouling coating composition comprising:
(i) polysiloxane-based binder and/or siloxane copolymer;
(ii) a copolymer as defined in any one of claims 1 to 7, preferably in an amount of 0.1-30 wt%, based on the total weight of the composition; and
(iii) optionally an antifouling agent.

10. A method for preparing a composition as claimed in claim 9, comprising mixing:
(i) polysiloxane-based binder and/or siloxane copolymer;
(ii) a copolymer as defined in any one of claims 1 to 7; and
(iii) optionally an antifouling agent.

11. A paint comprising a composition as claimed in claim 9.

12. A paint container containing a composition as claimed in claim 9.

13. A kit for preparing a composition as claimed in claim 9, comprising:
(i) a first container containing a copolymer as defined in any one of claims 1 to 7, a polysiloxane-based binder and/or siloxane copolymer and optionally antifouling agent;
(ii) a second container containing a crosslinking agent and/or a curing agent and optionally a catalyst;
(iii) optionally a third container containing a catalyst; and
(iv) optionally instructions for combining the contents of said containers.

14. An article comprising (e.g. covered with or coated with) a coating on at least a part of a surface thereof, wherein said coating comprises the composition as claimed in claim 9.

15. A method of coating an article to prevent fouling thereon, wherein said method comprises:
coating at least a part of a surface of said article with a composition as claimed in claim 9; and
drying and/or curing said coating.

16. Use of a composition as claimed in claim 9 for coating at least a part of a surface of an article to prevent fouling thereon.

## Patentansprüche

1. Copolymer umfassend Wiederholungseinheiten der Formeln (A), (B1) und/oder (B2) und wahlweise (C): 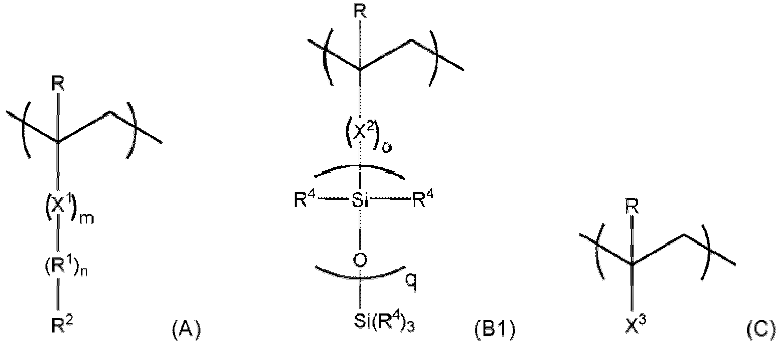 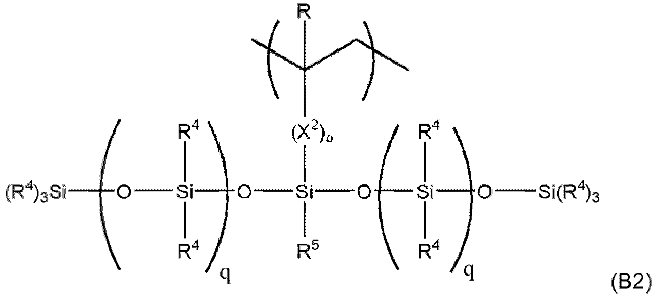 wobei
in der Formel (A)
R unter H und C₁₋₆-Alkyl ausgewählt wird;
X¹ unter COO, CONH und OCO ausgewählt wird;
m 0 oder 1 beträgt;
R¹ unter substituiertem oder unsubstituiertem, linearem oder verzweigtem C₁₋₈-Alkylen ausgewählt wird;
n 0 oder 1 beträgt; und
R² ein substituiertes oder unsubstituiertes Heterocyclyl, NR^{x}R^{y}, NHCOR^{x} oder CONR^{x}R^{y} ist, wobei R^{x} und R^{y} unabhängig unter substituiertem oder unsubstituiertem, linearem oder verzweigtem C₁₋₈-Alkyl ausgewählt werden,
in den Formeln (B1) und (B2)
R unter H und C₁₋₆-Alkyl und bevorzugt H und Methyl ausgewählt wird
X² unter COOR³ und OCOR³ und bevorzugt COOR³ ausgewählt wird;
o 0 oder 1, bevorzugt 1 beträgt;
R³ unter substituiertem oder unsubstituiertem, linearem oder verzweigtem C₁₋₈-Alkylen ausgewählt wird;
jedes R⁴ unabhängig unter C₁₋₁₀-Alkyl und C₅₋₁₀-Aryl gewählt wird; und
in der Formel (B1)
q eine ganze Zahl von 1 bis 160 ist;
und in der Formel (B2)
q 0 oder eine ganze Zahl von 1 bis 80 ist
R⁵ unter C₁₋₁₀-Alkyl, C₅₋₁₀-Aryl oder O-Si(R⁶)₃ ausgewählt wird, wobei R⁶ unabhängig unter C₁₋₁₀-Alkyl und C₅₋₁₀-Aryl ausgewählt wird;
in der Formel (C):
R unter H und C₁₋₆-Alkyl ausgewählt wird; und
X³ unter COOH, COOR⁷, OCOR⁷, OH oder OR⁷ ausgewählt wird, wobei R⁷ unter substituiertem oder unsubstituiertem, linearem oder verzweigtem C₁₋₈-Alkylen ausgewählt wird;
wobei das Copolymer 1-40 Gew.-% Wiederholungseinheit (A), insgesamt 10-90 Gew.-% Wiederholungseinheiten (B1) und/oder (B2) und 0 bis 70 Gew.-% Wiederholungseinheit (C ) umfasst.

2. Copolymer nach Anspruch 1, ferner eine Wiederholungseinheit der Formel (D) umfassend: 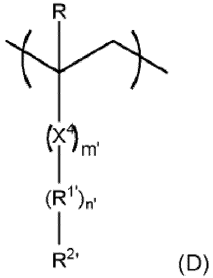 wobei in der Formel (D)
R unter H und C₁₋₆-Alkyl ausgewählt wird;
X⁴ unter COO und OCO ausgewählt wird;
m' 0 oder 1 beträgt;
R^{1'} unter substituiertem oder unsubstituiertem, linearem oder verzweigtem C₁₋₈-Alkylen ausgewählt wird;
n' 0 oder 1 beträgt; und
R^{2'} Polyalkylenoxid ist.

3. Copolymer nach Anspruch 1 oder 2, wobei n 0 beträgt und bevorzugt m 0 beträgt.

4. Copolymer nach Anspruch 1 oder 2, wobei n 1 beträgt und R¹ unsubstituiertes, lineares C₁₋₃-Alkylen ist.

5. Copolymer nach einem der vorhergehenden Ansprüche, wobei R² ein Heterocyclyl oder NR^{x}R^{y} ist, wobei R^{x} und R^{y} unabhängig von C₁₋₃-Alkyl ausgewählt werden.

6. Copolymer nach einem der vorhergehenden Ansprüche, wobei jedes R⁴ unabhängig von C₁₋₄-Alkyl ausgewählt wird.

7. Copolymer nach einem der vorhergehenden Ansprüche, wobei das Copolymer 5-35 Gew.-% Wiederholungseinheit (A) und/oder insgesamt 30-90 Gew.-% Wiederholungseinheiten (B1) und/oder (B2) und/oder 0,5 bis 50 Gew.-% Wiederholungseinheit (C) und/oder 0 bis 30 Gew.-% Wiederholungseinheit (D) umfasst und/oder das Copolymer ein gewichtsdurchschnittliches Molekulargewicht von 10 000 bis 50 000, noch bevorzugter 15 000 bis 40 000, aufweist.

8. Verfahren für die Herstellung eines Copolymers nach einem der Ansprüche 1 bis 7, umfassend:
Polymerisieren von Monomeren jeder der Formel (a) und (b1) und/oder (b2) und wahlweise der Formel (c): 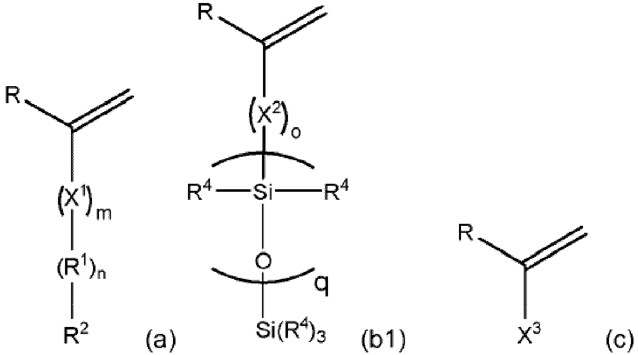 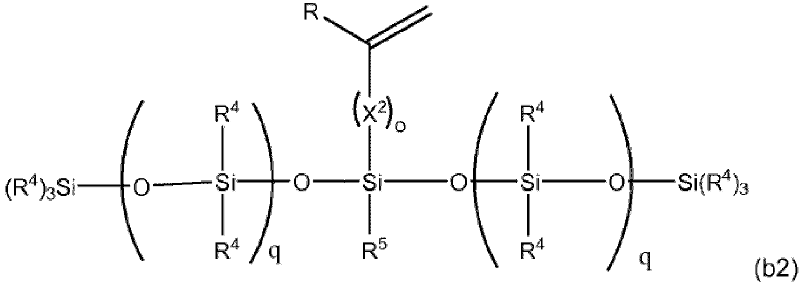
wobei
R, X¹, X², X³, R¹, R², R³, R⁴, m, n, o und q wie in Anspruch 1 definiert sind.

9. Antifouling-Beschichtungszusammensetzung, umfassend:
(i) Bindemittel auf Polysiloxanbasis und/oder Siloxancopolymer;
(ii) ein Copolymer wie nach einem der Ansprüche 1 bis 7 definiert, bevorzugt in einer Menge von 0,1-30 Gew.-%, auf das Gesamtgewicht der Zusammensetzung bezogen; und
(iii) wahlweise ein Antifouling-Mittel.

10. Verfahren für die Herstellung einer Zusammensetzung nach Anspruch 9, umfassend Mischen:
(i) Bindemittel auf Polysiloxanbasis und/oder Siloxancopolymer;
(ii) eines Copolymers wie nach einem der Ansprüche 1 bis 7 definiert, und
(iii) wahlweise eines Antifouling-Mittels.

11. Anstrich umfassen eine Zusammensetzung nach Anspruch 9.

12. Anstrichbehälter, der eine Zusammensetzung nach Anspruch 9 enthält.

13. Kit für die Herstellung einer Zusammensetzung nach Anspruch 9, umfassend:
(i) einen ersten Behälter, der ein Copolymer wie nach einem der Ansprüche 1 bis 7 definiert, ein Bindemittel auf Polysiloxanbasis und/oder Siloxancopolymer und wahlweise Antifouling-Mittel enthält;
(ii) einen zweiten Behälter, der ein Vernetzungsmittel und/oder ein Aushärtungsmittel und wahlweise einen Katalysator enthält;
(iii) wahlweise einen dritten Behälter, der einen Katalysator enthält; und
(iv) wahlweise Anweisungen zum Kombinieren der Inhalte der Behälter.

14. Artikel umfassend (z. B. bedeckt mit oder beschichtet mit) eine(r) Beschichtung auf mindestens einem Teil einer Oberfläche davon, wobei die Beschichtung die Zusammensetzung nach Anspruch 9 umfasst.

15. Verfahren zum Beschichteten eines Artikels zum Verhindern des Beschmutzens darauf, wobei das Verfahren Folgendes umfasst:
Beschichten mindestens eines Teils einer Oberfläche des Artikels mit einer Zusammensetzung nach Anspruch 9; und
Trocknen und/oder Aushärten der Beschichtung.

16. Verwendung einer Zusammensetzung nach Anspruch 9 zum Beschichten mindestens eines Teils einer Oberfläche eines Artikels zum Verhindern des Beschmutzens darauf.

## Revendications

1. Copolymère comprenant des unités de répétition des formules (A), (B1) et/ou (B2) et optionnellement (C) : 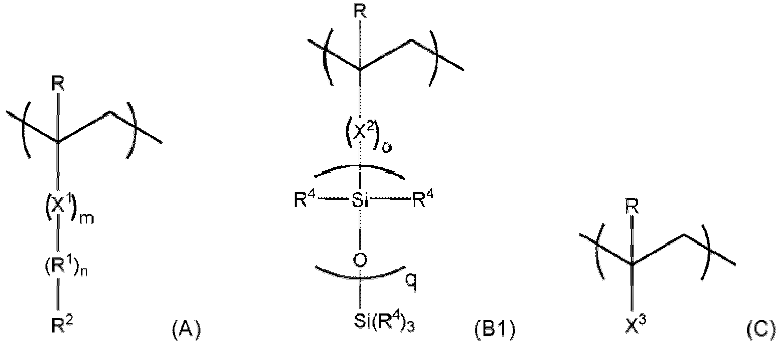 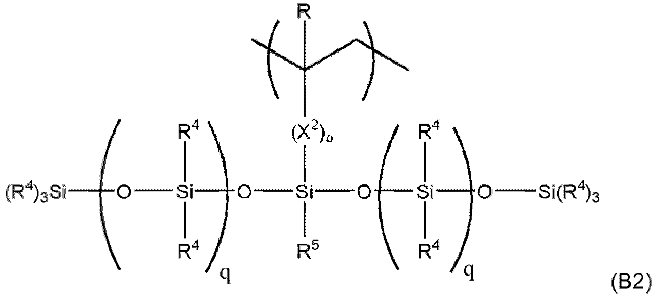 où :
dans la formule (A) :
R est choisi parmi : H et C₁₋₆ alkyle ;
X¹ est choisi parmi : COO, CONH et OCO ;
m est 0 ou 1 ;
R¹ est choisi parmi : C₁₋₈ alkylène, linéaire ou ramifié, substitué ou non substitué ;
n est 0 ou 1 ; et
R² est un hétérocyclyle substitué ou non substitué, NR^{x}R^{y}, NHCOR^{x} ou CONR^{x}R^{y}, dans lequel R^{x} et R^{y} sont indépendamment choisis parmi : C₁₋₈ alkyle, linéaire ou ramifié, substitué ou non substitué,
dans les formules (B1) et (B2) :
R est choisi parmi : H et C₁₋₆ alkyle ; et de préférence H et méthyle ;
X² est choisi parmi : COOR³ et OCOR³ et de préférence COOR³ ;
o est 0 ou 1, de préférence 1 ;
R³ est choisi parmi : C₁₋₈ alkylène, linéaire ou ramifié, substitué ou non substitué ;
chaque R⁴ est indépendamment choisi parmi : C₁₋₁₀ alkyle et C₅₋₁₀ aryle ; et
dans la formule (B1) :
q est un nombre entier de 1 à 160 ;
et dans la formule (B2) :
q est 0 ou un nombre entier de 1 à 80 ;
R⁵ est choisi parmi : C₁₋₁₀ alkyle, C₅₋₁₀ aryle ou O-Si(R⁶)₃, dans lequel R⁶ est indépendamment choisi parmi : C₁₋₁₀ alkyle et C₅₋₁₀ aryle ;
dans la formule (C) :
R est choisi parmi : H et C₁₋₆ alkyle ; et
X³ est choisi parmi : COOH, COOR⁷, OCOR⁷, OH ou OR⁷, dans lequel R⁷ est choisi parmi : C₁₋₈ alkyle, linéaire ou ramifié, substitué ou non substitué ;
où ledit copolymère comprend 1-40 % en poids d'unité de répétition (A), un total de 10-90 % en poids d'unités de répétition (B1) et/ou (B2) et 0 à 70 % en poids d'unité de répétition (C).

2. Copolymère selon la revendication 1, comprenant en outre une unité de répétition de formule (D) : 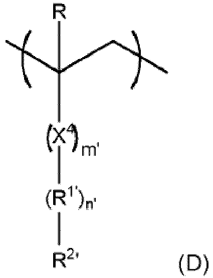 où, dans la formule (D) :
R est choisi parmi : H et C₁₋₆ alkyle ;
X⁴ est choisi parmi : COO et OCO ;
m' est 0 ou 1 ;
R^{1'} est choisi parmi : C₁₋₈ alkylène, linéaire ou ramifié, substitué ou non substitué ;
n'est 0 ou 1 ; et
R^{2'} est un polyoxyde d'alkylène.

3. Copolymère selon les revendications 1 ou 2, dans lequel n est 0 et de préférence m est 0.

4. Copolymère selon les revendications 1 ou 2, dans lequel n est 1 et R¹ est un C₁₋₃ alkylène linéaire, non substitué.

5. Copolymère selon l'une quelconque des revendications précédentes, dans lequel R² est un hétérocyclyle ou NR^{x}R^{y}, dans lequel R^{x} et R^{y} sont indépendamment choisis parmi : C₁₋₃ alkyle.

6. Copolymère selon l'une quelconque des revendications précédentes, dans lequel chaque R⁴ est indépendamment choisi parmi : C₁₋₄ alkyle.

7. Copolymère selon l'une quelconque des revendications précédentes, où ledit copolymère comprend 5-35 % en poids d'unité de répétition (A) et/ou un total de 30-90 % en poids d'unités de répétition (B1) et/ou (B2) et/ou 0,5 à 50 % en poids d'unité de répétition (C) et/ou 0 à 30 % en poids d'unité de répétition (D) et/ou ledit copolymère a un poids moléculaire moyen en poids de 10 000 à 50 000, plus préférablement 15 000 à 40 000.

8. Procédé de préparation d'un copolymère selon l'une quelconque des revendications 1 à 7, comprenant :
la polymérisation de monomères de chacune des formules (a) et (b1) et/ou (b2) et optionnellement de formule (c) : 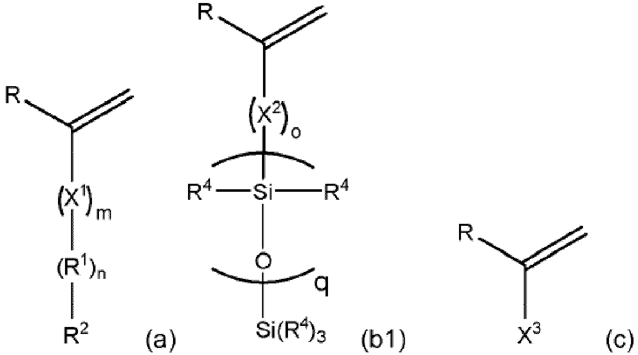 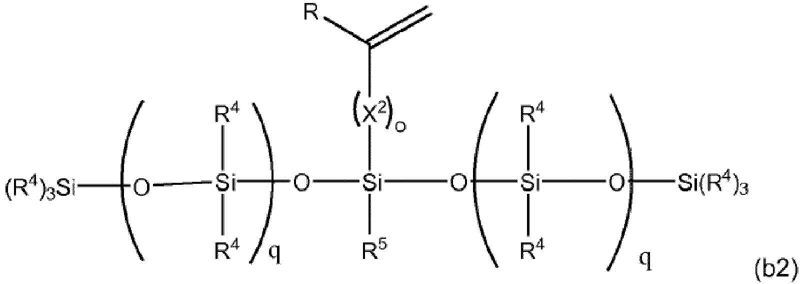
où :
R, X¹, X², X³, R¹, R², R³, R⁴, m, n, o et q sont tels que définis dans la revendication 1.

9. Composition de revêtement anti-salissures comprenant :
(i) un liant à base de polysiloxane et/ou un copolymère de siloxane ;
(ii) un copolymère tel que défini selon l'une quelconque des revendications 1 à 7, de préférence en une quantité de 0,1-30 % en poids, sur la base du poids total de la composition ; et
(iii) optionnellement un agent anti-salissures.

10. Procédé de préparation d'une composition selon la revendication 9, comprenant le mélange :
(i) d'un liant à base de polysiloxane et/ou d'un copolymère de siloxane ;
(ii) d'un copolymère tel que défini selon l'une quelconque des revendications 1 à 7 ; et
(iii) optionnellement d'un agent anti-salissures.

11. Peinture comprenant une composition selon la revendication 9.

12. Récipient de peinture contenant une composition selon la revendication 9.

13. Kit de préparation d'une composition selon la revendication 9, comprenant :
(i) un premier récipient contenant un copolymère tel que défini selon l'une quelconque des revendications 1 à 7, un liant à base de polysiloxane et/ou un copolymère de siloxane et optionnellement un agent anti-salissures ;
(ii) un deuxième récipient contenant un agent de réticulation et/ou un agent de durcissement et optionnellement un catalyseur ;
(iii) optionnellement un troisième récipient contenant un catalyseur ; et
(iv) optionnellement des instructions pour la combinaison des contenus desdits récipients.

14. Article comprenant (par ex. couvert avec ou revêtu avec) un revêtement sur au moins une partie d'une surface de celui-ci, où ledit revêtement comprend la composition selon la revendication 9.

15. Procédé de revêtement d'un article pour prévenir l'encrassement sur celui-ci, où ledit procédé comprend :
le revêtement d'au moins une partie d'une surface dudit article avec une composition selon la revendication 9 ; et
le séchage et/ou le durcissement dudit revêtement.

16. Utilisation d'une composition selon la revendication 9 pour le revêtement d'au moins une partie d'une surface d'un article pour prévenir l'encrassement sur celui-ci.
